# EUROPEAN PATENT APPLICATION

(11) **EP 4 280 312 A1**
(43) Date of publication of application: **22.11.2023**
(21) Application number: 22925239.0
(22) Date of filing: 26.09.2022
(51) Int. Cl.: H01M 4/58, H01M 10/0525

(54) **ELECTRODE ASSEMBLY, BATTERY CELL, BATTERY, ELECTRIC DEVICE, WINDING DEVICE, AND METHOD**

(30) Priority: 31.03.2022 CN 202210335343
(71) Applicant: Contemporary Amperex Technology Co., Limited, Ningde City, Fujian 352100 (CN)
(72) Inventor: ZHAO, Wankui, Ningde Fujian 352100 (CN); CHEN, Yaojin, Ningde Fujian 352100 (CN); LIN, Gang, Ningde Fujian 352100 (CN); WANG, Yiruo, Ningde Fujian 352100 (CN); WANG, Peichao, Ningde Fujian 352100 (CN); HUANG, Guoda, Ningde Fujian 352100 (CN); XIE, Chao, Ningde Fujian 352100 (CN); CHEN, Wei, Ningde Fujian 352100 (CN)
(74) Representative: Ran, Handong
(86) International application number: PCT/CN2022/121435
(87) International publication number: WO 2023/184903

(57) **Abstract**

The present disclosure relates to an electrode assembly, a battery cell, a battery, an electrical equipment, a winding equipment, and a method, which belongs to the battery technology field. The electrode assembly includes a first electrode plate and a second electrode plate with opposite polarity, wherein the first electrode plate and the second electrode plate are stacked and wound along the winding direction to form the electrode assembly, wherein the first electrode plate includes a first segment and a second segment, wherein the first segment is provided with a first active substance layer, and the second segment is provided with a second active substance layer, and the first segment is located upstream of the second segment along the winding direction from inside to outside. The electrode assembly can be segmented to undergo differentiated treatments according to performance requirements to meet different performance requirements.

## Description

### Cross-Reference to Related Application

The present disclosure claims priority to Chinese Patent Application No. 202210335343.8, filed on March 31, 2022, entitled "Electrode Assembly, Battery Cell, Battery, Electrical Equipment, Winding Equipment, and Method", which is incorporated herein by reference in its entirety.

### Technical Field

The present disclosure relates to the field of battery technology, in particular to an electrode assembly, a battery cell, a battery, an electrical equipment, a winding equipment, and a method.

### Background Art

Energy conservation and emission reduction are key to the sustainable development of the automotive industry, and electric vehicles have become an important component of the sustainable development of the automotive industry due to their advantages in energy conservation and environmental protection. For electric vehicles, battery technology is an important factor related to their development.

A battery includes at least one battery cell, which includes an electrode assembly. The electrode assembly is usually wound from a positive electrode plate and a negative electrode plate, and the performance of the electrode plate determines the performance of the electrode assembly. In related technologies, the performance of electrode assembly is poor and cannot be differentiated.

### Summary

The present disclosure aims at providing an electrode assembly, a battery cell, a battery, an electrical equipment, a winding equipment, and a method. The electrode assembly can be segmented to be treated according to performance requirements to meet different performance requirements.

The present disclosure is implemented through the following technical solution.

In the first aspect, the present disclosure provides an electrode assembly, including a first electrode plate and a second electrode plate with opposite polarity, wherein the first electrode plate and the second electrode plate are stacked and wound along the winding direction to form the electrode assembly, wherein the first electrode plate includes a first segment and a second segment, wherein the first segment is provided with a first active substance layer, and the second segment is provided with a second active substance layer, and the first segment is located upstream of the second segment along the winding direction from inside to outside.

According to the electrode assembly of the embodiment of the present disclosure, the first electrode plate includes a first segment and a second segment, and the first segment is located upstream of the second segment along the winding direction from inside to outside. By dividing the first electrode plate into a first segment and a second segment, different treatments can be respectively performed on the first segment in the inner circle and the second segment in the outer circle, so that the first segment and the second segment have different physical or chemical properties, so as to better adjust the performance of electrode assembly and meet different performance requirements through internal and external differential configuration.

According to some embodiments of the present disclosure, the coating density of the first active substance layer is different from that of the second active substance layer.

In the above solution, the coating density of the first active substance layer is different from that of the second active substance layer, so that the energy density of the electrode assembly can be adjusted to meet the different energy density requirements of the electrode assembly.

According to some embodiments of the present disclosure, the coating density of the first active substance layer is lower than that of the second active substance layer.

In the above solution, the coating density of the first active substance layer is less than that of the second active substance layer, and the fracture toughness of the first segment is greater than that of the second segment, so that the bending region of the first segment is not easy to crack or fracture, thereby reducing the probability of crack or fracture of the first electrode plate, and thus improving the safety of the battery cell composed of the electrode assembly.

According to some embodiments of the present disclosure, the ratio of the thickness of the first active substance layer to the thickness of the second active substance layer is 1/2-3/2.

In the above solution, under the condition that the coating density of the first active substance layer is smaller than that of the second active substance layer, the ratio of the thickness of the first active substance layer to the thickness of the second active substance layer meets the above range, thereby ensuring that there are no steps at the transition between the first and second segments, avoiding the shedding of active substances or causing indentation, and ensuring the quality of the electrode assembly.

According to some embodiments of the present disclosure, the active substance material of the first active substance layer is the same as or different from the active substance material of the second active substance layer.

In the above solution, the active substance material of the first active substance layer is different from the active substance material of the second active substance layer, such that the performance of the first and second segments can be adjusted to meet the different physical or chemical properties of the electrode components.

According to some embodiments of the present disclosure, along the winding direction from inside to outside, the tail of the first segment is connected to the head of the second segment, or a gap is provided between the tail of the first segment and the head of the second segment.

In the above solution, in the embodiment where the tail of the first segment is connected to the head of the second segment, it is convenient to ensure the continuity of the first electrode plate. The first electrode plate has more active substances, ensuring that the electrode assembly has a higher energy density. In the embodiment where there is a gap between the tail of the first segment and the head of the second segment, it can facilitate the processing of the first and second segments and reduce the manufacturing difficulty of the first electrode plate.

According to some embodiments of the present disclosure, the first electrode plate further includes a first current collector, wherein the first active substance layer and the second active substance layer are respectively arranged on the first current collector.

According to some embodiments of the present disclosure, the first electrode plate further includes a first current collector segment and a second current collector segment, wherein the first active substance layer is arranged on the first current collector segment to form the first segment, and the second active substance layer is arranged on the second current collector segment to form the second segment.

In the above solution, the first active substance layer is arranged on the first current collector segment to form the first segment, and the second active substance layer is arranged on the second current collector segment to form the second segment, thereby facilitating the processing and manufacturing of the first and second segments.

According to some embodiments of the present disclosure, the tail of the first segment and the head of the second segment are connected through a first connecting part.

In the above solution, the first and second segments are connected by the first connecting part to achieve the positioning of the first and second segments, thereby limiting the position movement of the first and second segments. When the first segment is wound, the first segment can drive the second segment through the first connecting part to provide winding power for the second segment, thereby achieving the sequential winding of the first and second segments.

According to some embodiments of the present disclosure, the electrode assembly further includes a separator for separating the first and second electrode plates.

In the above solution, the first and second electrode plates are separated by a separator to avoid short circuit due to contact of the first and second electrode plates and thus improve safety.

According to some embodiments of the present disclosure, the head of the second segment is connected to the separator.

In the above solution, the head of the second segment is connected to the separator, which locates the head of the second segment through the separator, thereby limiting the position movement of the first and second segments. During winding, the separator can drive the head of the second segment to be wound, thereby providing winding power for the second segment to achieve the sequential winding of the first and second segments.

According to some embodiments of the present disclosure, the second electrode plate includes a third segment and a fourth segment, wherein the third segment is provided with a third active substance layer, and the fourth segment is provided with a fourth active substance layer; and the third segment is located upstream of the fourth segment in the winding direction from inside to outside.

In the above solution, by dividing the second electrode plate into the third segment and the fourth segment, different treatments can be respectively performed on the third segment in the inner circle and the fourth segment in the outer circle, so that the third and fourth segments have different physical or chemical properties. The performance of the electrode assembly can be better adjusted through internal and external differential configuration.

According to some embodiments of the present disclosure, the coating density of the third active substance layer is different from that of the fourth active substance layer; and/or, the thickness of the third active substance layer is different from that of the fourth active substance layer; and/or, the active substance material of the third active substance layer is the same as or different from the active substance material of the fourth active substance layer.

In the above solution, the physical or chemical properties of the third segment and the fourth segment can be changed by changing the coating density, thickness, and active substance material formula of the third and fourth active substance layers, so that the electrode assembly can meet different performance requirements and be suitable for different usage scenarios.

According to some embodiments of the present disclosure, the ratio of the thickness of the third active substance layer to the thickness of the fourth active substance layer is 1/2-3/2.

In the above solution, while ensuring that the coating density of the third active substance layer is less than that of the fourth active substance layer, the ratio of the thickness of the third active substance layer to the thickness of the fourth active substance layer meets the above range, thereby ensuring that there are no steps at the transition between the third and fourth segments, avoiding the shedding of active substances or causing indentation, and thus ensuring the quality of the electrode assembly.

According to some embodiments of the present disclosure, along the winding direction from inside to outside, the tail of the third segment is connected to the head of the fourth segment, or a gap is provided between the tail of the third segment and the head of the fourth segment.

In the above solution, in the embodiment where the tail of the third segment is connected to the head of the fourth segment, it is convenient to ensure the continuity of the second electrode plate. The second electrode plate has more active substances, ensuring that the electrode assembly has a higher energy density. In the embodiment where there is a gap between the tail of the third segment and the head of the fourth segment, it can facilitate the processing of the third and fourth segments and reduce the manufacturing difficulty of the second electrode plate.

According to some embodiments of the present disclosure, the second electrode plate further includes a second current collector, wherein the third and fourth active substance layers are respectively arranged on the second current collector.

According to some embodiments of the present disclosure, the second electrode plate further includes a third current collector segment and a fourth current collector segment, wherein the third active substance layer is arranged on the third current collector segment to form the third segment, and the fourth active substance layer is arranged on the fourth current collector segment to form the fourth segment.

In the above solution, the third active substance layer is arranged on the third current collector segment to form the third segment, and the fourth active substance layer is arranged on the fourth current collector segment to form the fourth segment, thereby facilitating the processing and manufacturing of the third and fourth segments.

According to some embodiments of the present disclosure, the tail of the third segment and the head of the fourth segment are connected through a second connecting part.

In the above solution, the second connecting part is configured to connect the third and fourth segments, thereby achieving the positioning of the third and fourth segments, and limiting the position movement of the third and fourth segments. When the third segment is wound, the third segment can drive the fourth segment through the second connecting part to provide the winding power for the fourth segment, thereby achieving the sequential winding of the third and fourth segments.

According to some embodiments of the present disclosure, the electrode assembly further includes a separator for separating the first and second electrode plates, and the head of the fourth segment is connected to the separator.

In the above solution, the head of the fourth segment is connected to the separator, which locates the head of the fourth segment through the separator, thereby limiting the position movement of the third and fourth segments. During winding, the separator can drive the head of the fourth segment to be wound, thereby providing winding power for the fourth segment to achieve the sequential winding of the third and fourth segments.

According to some embodiments of the present disclosure, the electrode assembly includes two separators, wherein the two separators are each located on both sides of the second electrode plate. The head of the second segment is connected to one of the separators, and the head of the fourth segment is connected to another separator.

In the above solution, one separator is connected to the head of the second segment, and the other separator is connected to the head of the fourth segment. One separator limits the position of the second segment, and the other separator limits the position of the fourth segment. When winding and forming the electrode assembly, one separator can drive the head of the second segment to be wound, which provides winding power for the second segment to achieve the sequential winding of the first and second segments. Another separator can drive the head of the fourth segment to be wound, which provides winding power for the fourth segment to achieve sequential winding of the third and fourth segments.

According to some embodiments of the present disclosure, the number of turns in the third segment is less than the number of turns in the fourth segment.

In the above solution, the number of turns in the third segment is smaller than that in the fourth segment. In other words, the number of turns of winding in the fourth active substance layer is greater than that in the third active substance layer. Due to the coating density of the fourth active substance layer being smaller than that of the third active substance layer, under the same electrode assembly thickness, when the number of turns of winding in the fourth active substance layer is more, the electrode assembly can be ensured to have a higher energy density.

According to some embodiments of the present disclosure, the number of turns in the first segment is less than the number of turns in the second segment.

In the above solution, the number of turns in the first segment is smaller than the number of turns in the second segment, so as to ensure that the electrode assembly has a higher energy density.

According to some embodiments of the present disclosure, the coating density of the second active substance layer is 10%-200% larger than that of the first active substance layer.

In the above solution, the coating density of the second active substance layer is larger than that of the first active substance layer, thereby ensuring that the first electrode plate has more active substances, thereby ensuring that the battery composed of the electrode assembly has a higher energy density.

In the second aspect, the present disclosure provides a battery cell, which includes an electrode assembly in the aforementioned embodiments.

In a third aspect, the present disclosure provides a battery, which includes a battery cell in the aforementioned embodiment.

In a fourth aspect, the present disclosure provides an electrical equipment, including a battery in the aforementioned embodiment.

In a fifth aspect, the present disclosure provides a winding equipment, which includes: a first providing device, for providing a first electrode plate, wherein the first electrode plate includes a first segment and a second segment, wherein the first segment is provided with a first active substance layer; and the second segment is provided with a second active substance layer; a second providing device, for providing a second electrode plate with opposite polarity to the first electrode plate; a separator providing mechanism, for providing separator; a winding mechanism, arranged downstream of the first providing device, the second providing device, and the separator providing mechanism, for winding the first segment, the second segment, the separator, and the second electrode plate along the winding direction to form an electrode assembly, wherein the first providing device is configured to provide the first electrode plate by causing the first segment to enter the winding mechanism first and causing the second segment to enter the winding mechanism after the first segment.

According to the winding equipment of the embodiment of the present disclosure, the winding mechanism winds the first segment, second segment, separator, and second electrode plate to form an electrode assembly. The first and second segments can be treated differently, so that the first and second segments have different physical or chemical properties. The performance of the electrode assembly can be better adjusted through internal and external differential configuration.

According to some embodiments of the present disclosure, the coating density of the first active substance layer is different from that of the second active substance layer; and/or, the thickness of the first active substance layer is different from that of the second active substance layer; and/or, the active substance material of the first active substance layer is the same as or different from the active substance material of the second active substance layer.

In the above solution, the physical or chemical properties of the first segment and the second segment can be changed by changing the coating density, thickness, and active substance material formula of the first and second active substance layers, so that the electrode assembly can meet different performance requirements and be suitable for different usage scenarios.

According to some embodiments of the present disclosure, the second electrode plate includes a third segment and a fourth segment, wherein the third segment is provided with a third active substance layer; and the fourth segment is provided with a fourth active substance layer, wherein the second providing device is configured to provide the second electrode plate by causing the third segment to enter the winding mechanism first and causing the fourth segment to enter the winding mechanism after the third segment.

In the above solution, different treatments can be applied to the third and fourth segments, respectively, so that the third and fourth segments have different physical or chemical properties. The performance of the electrode assembly can be better adjusted through internal and external differential configuration.

According to some embodiments of the present disclosure, the coating density of the third active substance layer is different from that of the fourth active substance layer; and/or, the thickness of the third active substance layer is different from that of the fourth active substance layer; and/or, the active substance material of the third active substance layer is the same as or different from the active substance material of the fourth active substance layer.

In the above solution, the physical or chemical properties of the third segment and the fourth segment can be changed by changing the coating density, thickness, and active substance material formula of the third and fourth active substance layers, so that the electrode assembly can meet different performance requirements and be suitable for different usage scenarios.

According to some embodiments of the present disclosure, the separator includes a first separator and a second separator, and the separator providing mechanism is configured to provide the first separator and the second separator; the winding equipment also includes a first composite mechanism, which is located downstream of the first providing device and the separator providing mechanism, wherein the first composite mechanism is configured to composite the first separator, the first electrode plate, and the second separator into a first electrode plate component; the first providing device is configured to provide the first electrode plate by causing the first segment to first enter the first composite mechanism and causing the second segment to enter the first composite mechanism after the first segment; and the winding mechanism is located downstream of the first composite mechanism and is configured to wind the first electrode plate component and second electrode plate along the winding direction to form an electrode assembly.

In the above solution, the first separator, the first electrode plate, and the second separator are combined to form the first electrode plate group. The first separator and the second separator play a positioning role on the first electrode plate, and the first separator and the second separator clamp the second segment to drive the second segment to be wound, thereby providing winding power for the second segment, and thus achieving the sequential winding of the first and second segments.

According to some embodiments of the present disclosure, the first providing device includes a first connecting mechanism, which is configured to connect the tail of the first segment and the head of the second segment through a first connecting part.

In the above solution, the first segment and the second segment are connected through the first connecting part. When the first segment is wound, the first segment can drive the second segment through the first connecting part to provide winding power for the second segment, thereby achieving the sequential winding of the first segment and the second segment.

According to some embodiments of the present disclosure, the separator includes a first separator and a second separator, and the winding equipment includes two separator providing mechanisms, wherein one separator providing mechanism is configured to provide the first separator and the other separator providing mechanism is configured to provide the second separator. The winding equipment further includes a first composite mechanism, located downstream of the first providing device and one separator providing mechanism, wherein the first composite mechanism is configured to composite the first electrode plate and the first separator into a first electrode plate component; and a second composite mechanism, located downstream of the second providing device and another separator providing mechanism, wherein the second composite mechanism is configured to composite the second electrode plate and the second separator into a second electrode plate component. The first providing device is configured to provide the first electrode plate by causing the first segment to first enter the first composite mechanism and causing the second segment to enter the first composite mechanism after the first segment; and the winding mechanism is located downstream of the first composite mechanism and the second composite mechanism, and configured to wind the first and second electrode plate components along the winding direction to form an electrode assembly.

In the above solution, the first electrode plate and the first separator are combined into a first electrode plate component through the first composite mechanism to facilitate the positioning of the first electrode plate through the first separator, and the second electrode plate and the second separator are combined into a second electrode plate component through the second composite mechanism to facilitate the positioning of the second electrode plate through the second separator, Furthermore, thereby ensuring that the first and second electrode plates in the formed electrode assembly by winding are separated by the first and second separators, thereby avoiding short circuit caused by contact between the first and second electrode plates, and ensuring the safety of the battery cell composed of the electrode assembly.

In a sixth aspect, the present disclosure provides a winding method, which includes: providing a first electrode plate, wherein the first electrode plate includes a first segment and a second segment, wherein the first segment is provided with a first active substance layer, and the second segment is provided with a second active substance layer; providing a second electrode plate, the polarity of which is opposite to that of the first electrode plate; providing a separator; and winding the first segment, the second segment, the separator, and the second electrode plate along the winding direction to form an electrode assembly, wherein the first segment is first wound with the separator and the second electrode plate, and the second segment is wound with the separator and the second electrode plate after the first segment.

According to some embodiments of the present disclosure, the coating density of the first active substance layer is different from that of the second active substance layer; and/or, the thickness of the first active substance layer is different from that of the second active substance layer; and/or, the active substance material of the first active substance layer is the same as or different from the active substance material of the second active substance layer.

The above description is only an overview of the technical solution of the present disclosure. In order to have a clearer understanding of the technical means of the present disclosure, it can be implemented according to the content of the specification. In order to make the above and other purposes, features, and advantages of the present disclosure more obvious and understandable, the specific implementation methods of the present disclosure are hereby listed.

### Brief Description of Drawings

In order to more clearly illustrate technical solutions of embodiments of the present disclosure, drawings required for use in the embodiments of the present disclosure will be described briefly below. It is obvious that the drawings in the following description are merely illustrative of some embodiments of the present disclosure. It will be understood by those of ordinary skill in the art that other drawings can also be obtained according to the drawings without any inventive effort.
FIG. 1 is a schematic diagram of the structure of the vehicle provided in some embodiments of the present disclosure;
FIG. 2 is a schematic diagram of the exploded structure of the battery provided in some embodiments of the present disclosure;
FIG. 3 is a schematic diagram of the exploded structure of the battery cell provided in some embodiments of the present disclosure;
FIG. 4 is a structural schematic diagram of the electrode assembly provided in some embodiments of the present disclosure;
FIG. 5 is a schematic diagram of the structure of the first electrode plate provided in some embodiments of the present disclosure;
FIG. 6 is a schematic diagram of the structure of the first electrode plate provided in some other embodiments of the present disclosure;
FIG. 7 is a schematic diagram of the first segment and second segment connected through the first connecting part provided in some embodiments of the present disclosure;
FIG. 8 is a schematic diagram of the connection between the first and second segments and the separator provided in some embodiments of the present disclosure;
FIG. 9 is a schematic diagram of the connection between the first and second segments and the separator provided in some other embodiments of the present disclosure;
FIG. 10 is a structural schematic diagram of the electrode assembly provided in some other embodiments of the present disclosure;
FIG. 11 is a schematic diagram of the structure of the second electrode plate provided in some embodiments of the present disclosure;
FIG. 12 is a schematic diagram of the structure of the second electrode plate provided in some other embodiments of the present disclosure;
FIG. 13 is a schematic diagram of the third segment and fourth segment connected through a second connecting part provided in some embodiments of the present disclosure;
FIG. 14 is a schematic diagram of the connection between the first electrode plate, the second electrode plate, and the separator provided in some embodiments of the present disclosure;
FIG. 15 is a schematic diagram of the structure of the winding equipment provided in some embodiments of the present disclosure;
FIG. 16 is a schematic diagram of the first conveying mechanism provided in some embodiments of the present disclosure in the first conveying position;
FIG. 17 is a schematic diagram of the second conveying mechanism provided in some embodiments of the present disclosure in the first conveying position;
FIG. 18 is a schematic diagram of the structure of the winding equipment provided in some other embodiments of the present disclosure;
FIG. 19 is a schematic diagram of the third conveying mechanism provided in some embodiments of the present disclosure in the second conveying position;
FIG. 20 is a schematic diagram of the fourth conveying mechanism provided in some embodiments of the present disclosure in the second conveying position; and
FIG. 21 is a schematic flowchart of the winding method provided in some embodiments of the present disclosure.

In the attached drawings, they are not drawn to the actual scale.

Reference Signs: 100-battery; 10-box; 11-first sub-box; 12-second sub-box; 20-battery cell; 21-end cover; 22-shell; 23-electrode assembly; 231-first electrode plate; 2311-first segment; 2311a-first active substance layer; 2311b-first current collector segment; 2312-second segment; 2312a-second active substance layer; 2312b-second current collector segment; 2313-first current collector; 2314-first connecting part; 232-second electrode plate; 2321-third segment; 2321a-third active substance layer; 2321b-third current collector segment; 2322-fourth segment; 2322a-fourth active substance layer; 2322b-fourth current collector segment; 2323-second current collector; 233-separator; 233a-first separator; 233b-second separator; 2324-second connecting part; 234-straight region; 235-bending region; 24-electrode terminal; 200-controller; 300-motor; 400-winding equipment; 411-first providing device; 411a-first sub-provider; 411b-second sub-provider; 412-second providing device; 412a-third sub-provider; 412b-fourth sub-provider; 42-separator providing mechanism; 431-first composite mechanism; 432-second composite mechanism; 44-winding mechanism; 451-first conveying mechanism; 452-second conveying mechanism; 453-first adjusting mechanism; 454-third conveying mechanism; 455-fourth conveying mechanism; 456-second adjusting mechanism; 461-first caching mechanism; 462-second caching mechanism; 463-third caching mechanism; 464-fourth caching mechanism; 471-first correcting mechanism; 472-second correcting mechanism; 473-third correcting mechanism; 474-fourth correcting mechanism; 481-first cutting mechanism; 482-second cutting mechanism; 491-first image detection system; 492-first pre-roll correcting mechanism; 493-second image detection system; 494-second pre-roll correcting mechanism; 511-first pre-roll tension system; 512-second pre-roll tension system; 52-separator cutter; 53-ending pressing wheel; 54-gluing pressing wheel; 55-compacting station; 1000-vehicle.

### Detailed Description of Embodiments

In order to make the objectives, technical solutions and advantages of the embodiments of the present disclosure clearer, the technical solutions in the embodiments of the present disclosure will be described clearly and completely below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprising/including", "provided with", and any variations thereof in the description and claims, as well as the brief description of the drawings described above of the present disclosure are intended to cover non-exclusive inclusions. The terms "first", "second", etc. in the description and the claims of the present disclosure or the accompanying drawings are used to distinguish different objects, rather than to describe specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment. Those skilled in the art should understand, in explicit and implicit manners, that an embodiment described in the present disclosure may be combined with another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of A, the presence of both A and B, and the presence of B. In addition, the character "/" in the present disclosure generally indicates that the associated objects before and after that have an "or" relationship.

The term "multiple (a plurality of)" in the present disclosure refers to two or more (including two), similarly, "multiple groups" refer to two or more groups (including two groups), and "multiple plates"refer to two or more plates (including two plates).

In the present disclosure, the battery referred to refers to a single physical module that includes one or more battery cells to provide higher voltage and capacity. For example, the batteries mentioned in the present disclosure may include battery modules or battery packs, etc.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the current collector without the positive electrode active substance layer protrudes from the current collector coated by the positive electrode active substance layer. The current collector without the positive electrode active substance layer is used as the positive electrode tab. Taking lithium-ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the current collector without the negative electrode active substance layer protrudes from the current collector coated by the negative electrode active substance layer. The current collector without the negative electrode active substance layer is used as the negative electrode tab. The material for the negative electrode current collector can be copper, and the active substance of the negative electrode can be carbon, silicon or the like. In order to ensure that fusing does not occur through high current, the number of positive electrode tabs is multiple and stacked together, and the number of negative electrode tabs is multiple and stacked together. The material of the separator can be PP (polypropylene) or PE (polyethylene), etc.

The separator has electronic insulation, which is used to isolate adjacent positive and negative electrode plates, and prevent short circuit between adjacent positive and negative electrode plates. The separator has a large number of micropores penetrating it, which can ensure the free passage of electrolyte ions and have good permeability to lithium ions. Therefore, the separator basically cannot block the passage of lithium ions.

In order to make the lithium-ion battery cells have a smaller volume and have higher energy density, the negative electrode plate, positive electrode plate, and separator in the electrode assembly of lithium-ion battery cells can be wound and then compacted. The electrode assembly includes a straight region and a bending region located at both ends of the straight region. The straight region refers to the region in the electrode assembly with a parallel structure, that is, the surfaces of the negative electrode plate, positive electrode plate, and separator within the straight region are all flat. The bending region refers to the region within the electrode assembly that is of a bending structure, that is, the negative electrode plate, positive electrode plate, and separator within the bending region are all bent, indicating that the surface of each layer of negative electrode plate, positive electrode plate, and separator in the bending region of the electrode assembly is curved surface. In the embodiments of the present disclosure, the electrode assembly is introduced by taking a winding structure as an example. In the embodiments of the present disclosure, the number of separators is two, and the electrode assembly can be formed by stacking and winding a negative electrode plate, a first separator, a positive electrode plate, and a second separator, or stacking and winding a first separator, a negative electrode plate, a second separator, and a positive electrode plate.

The active substance layer is formed by applying the active substance to the surface of the current collector, and the coating density of the active substance layer refers to the coating weight of the active substance per unit surface area. After applying the active substance layer to the current collector, drying, rolling, and other operations are also required to form the electrode plate. Drying operation is to reduce the moisture in the active substance layer to meet the required process requirements; and the rolling operation compacts the active substance layer and reduces the thickness of the electrode plate to meet the process requirements. After the electrode plate is dried and rolled, the higher the coating density of active substance on the electrode plate is, the lower the fracture toughness of the electrode plate is, and the electrode plate is prone to crack or fracture under bending and other conditions.

The development of battery technology needs to consider multiple design factors simultaneously, such as energy density, discharge capacity, charging and discharging rate, and other performance parameters. In addition, it is also necessary to consider the safety of the battery.

For battery cells, their performance depends on the performance of the electrode assembly. The electrode assembly is usually wound from a positive electrode plate and a negative electrode plate, and the performance of the electrode plate determines the performance of the electrode assembly. The electrode plate is of usually a continuous stripped structure, and the performance of each position of the electrode plate is not significantly different. The performance of the electrode assembly after the electrode plate is wound is determined. Based on the performance of the electrode assembly, the performance of the electrode assembly is poor and cannot be differentiated.

For example, in the prior art, due to the pursuit of energy density, the coating density of the active substance layer of the electrode plate is higher. After the electrode plate is rolled, the fracture toughness of the electrode plate is smaller, and the electrode plate is brittle, which is easy to crack or even break when it is bent under force. During the compaction or later preparation process of the wound electrode assembly, cracks or even fractures are prone to occurring in the bending region of the electrode plate, resulting in insufficient lithium intercalation space in the bending region, which can easily lead to lithium precipitation, and lithium crystal easily pierces the separator. At the same time, the broken electrode plate is also prone to piercing the separator, thereby leading to internal short circuit and affecting the safety of the battery cell, and making it impossible for the battery cell composed of the electrode assembly to be used in environments with high safety requirements.

In view of this, in order to solve the problem of poor performance and inability to differentiate treatment of electrode assembly, the inventor has conducted in-depth research and designed an electrode assembly. The electrode assembly includes a first electrode plate and a second electrode plate with opposite polarity, wherein the first electrode plate and the second electrode plate are stacked and wound along the winding direction to form the electrode assembly, wherein the first electrode plate includes a first segment and a second segment, wherein the first segment is provided with a first active substance layer, and the second segment is provided with a second active substance layer, and the first segment is located upstream of the second segment along the winding direction from inside to outside. The first segment in the inner circle and the second segment in the outer circle can be treated differently, so that the first and second segments have different physical or chemical properties. By internal and external differential configuration, the performance of the electrode assembly can be better adjusted to meet different usage needs.

In such electrode assembly, the first electrode plate is divided into the first and second segments, which can be processed differently according to different needs to meet different performance requirements.

The battery cell disclosed in the embodiments of the present disclosure can be used in, but is not limited to, electrical equipment such as vehicles, ships, or aircraft. The battery cell, battery, etc. disclosed in the present disclosure can be used to form the power supply system of the electrical equipment.

The embodiment of the present disclosure provides an electrical equipment using a battery as a power source, which can be but is not limited to mobile phones, tablet computers, laptops, electric toys, electric tools, electric bicycles, electric motorcycles, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical device in one embodiment of the present disclosure being the vehicle 1000 as an example to explain.

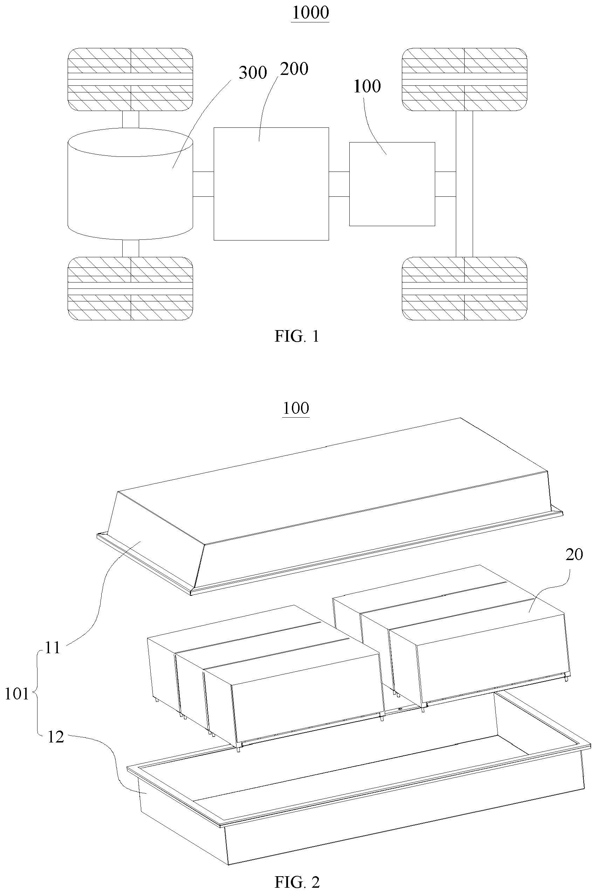

Referring to FIG. 1, FIG. 1 is a structural schematic diagram of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000, and be used for the electrical system of the vehicle, such as for the working power demand during vehicle startup, navigation, and operation.

The vehicle 1000 can also include a controller 200 and a motor 300, wherein the controller 200 is configured to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is a schematic diagram of the exploded structure of battery 100 provided in some embodiments of the present disclosure. The battery 100 includes a box 10 and a battery cell 20, which is accommodated within the box 10. In the above, the box 10 is configured to provide storage space for the battery cell 20, and the box 10 can be of various structures. In some embodiments, the box 10 may include a first sub-box 11 and a second sub-box 12, with the first sub-box 11 and the second sub-box 12 covering each other. The first sub-box 11 and the second sub-box 12 jointly define a storage space for accommodating the battery cell 20. The second sub-box 12 can be in a hollow structure with an opening at one end, the first sub-box 11 can be in a plate-shaped structure, and the first sub-box 11 is covered on the opening side of the second sub-box 12 to jointly define the storage space by the first sub-box 11 and the second sub-box 12. The first sub-box 11 and the second sub-box 12 can also both be in hollow structure with an opening on one side, and the opening side of the first sub-box 11 is covered on the opening side of the second sub-box 12. Of course, the box 10 formed by the first sub-box 11 and the second sub-box 12 can be of various shapes, such as cylinder, cuboid, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for achieving electrical connection between multiple battery cells 20.

In the above, each battery cell 20 can be a secondary battery or a primary battery; and can also be a lithium-sulfur battery, sodium-ion battery, or magnesium-ion battery, but is not limited thereto. The battery cell 20 can be cylindrical, flat, or rectangular, or be of other shapes.

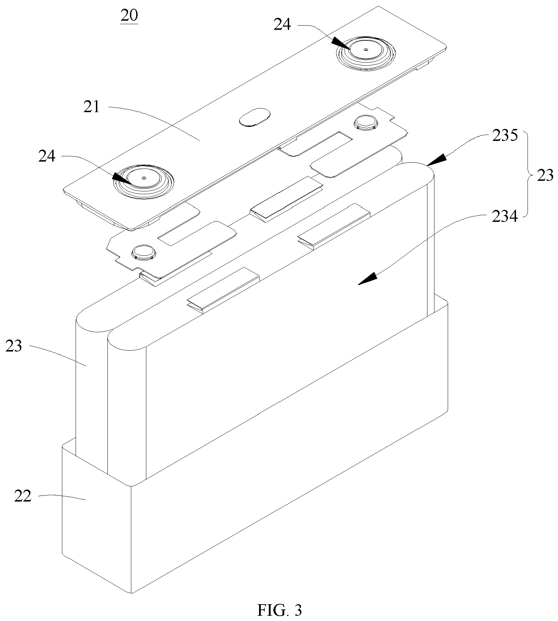

Referring to FIG. 3, FIG. 3 is a schematic diagram of the exploded structure of battery cell 20 provided in some embodiments of the present disclosure. Battery cell 20 refers to the smallest unit that constitutes the battery. As shown in FIG. 3, the battery cell 20 includes an end cover 21, a shell 22, an electrode assembly 23, and other functional components.

The end cover 21 refers to a component that covers the opening of the shell 22 to isolate the internal environment of the battery cell 20 from the external environment. Without limitation, the shape of the end cover 21 can adapt to the shape of the shell 22 to fit the shell 22. Optionally, the end cover 21 can be made of a material with a certain hardness and strength (such as aluminum alloy), so that the end cover 21 is less prone to deformation when subjected to compression and collision, thereby enabling the battery cell 20 to have higher structural strength and improved safety performance. Functional components such as electrode terminals 24 can be provided on the end cover 21. The electrode terminal 24 can be electrically connected to the electrode assembly 23 for outputting or inputting electrical energy from the battery cell 20. In some embodiments, the end cover 21 may also be equipped with a pressure relief mechanism for releasing internal pressure when the internal pressure or temperature of the battery cell 20 reaches a threshold. The material of the end cover 21 can also be various, such as copper, iron, aluminum, stainless steel, aluminum alloy, plastic, etc. The embodiments of the present disclosure do not make special limitations on this. In some embodiments, an insulating element can also be provided on the inner side of the end cover 21, which can be used to isolate the electrical connection components inside the shell 22 from the end cover 21, so as to reduce the risk of short circuit. For example, insulating element can be made of plastic, rubber, etc.

The shell 22 is a component used to cooperate with the end cover 21 to form an internal environment of the battery cell 20, wherein the formed internal environment can be used to accommodate the electrode assembly 23, electrolyte, and other components. The shell 22 and the end cover 21 can be independent components, the opening can be set on the shell 22, and the internal environment of the battery cell 20 can be formed by making the end cover 21 cover on the opening at the opening. Without limitation, it is also possible to integrate the end cover 21 and the shell 22. Specifically, the end cover 21 and the shell 22 can form a common connection surface before other components enter the shell. When it is necessary to encapsulate the interior of the shell 22, the end cover 21 can then cover the shell 22. The shell 22 can be of various shapes and sizes, such as a cuboid, cylinder, hexagonal prism, etc. Specifically, the shape of shell 22 can be determined based on the specific shape and size of electrode assembly 23. The material of shell 22 can be various, such as copper, iron, aluminum, stainless steel, aluminum alloy, plastic, etc. The embodiments of the present disclosure do not make special limitations on this.

The electrode assembly 23 is a component in the battery cell 20 that undergoes electrochemical reactions. The shell 22 may contain one or more electrode assemblies 23. The electrode assembly 23 is mainly formed by winding the positive and negative electrode plates, and usually has a separator between the positive and negative electrode plates. The separator is used for insulation and isolation of the positive and negative electrode plates to avoid internal short circuit. The parts of the positive and negative electrode plates that contain active substances form the main body of the cell assembly, and the parts of the positive and negative electrode plates that do not contain active substances each form the electrode tabs. The positive and negative electrode tabs can be located at one end of the main body together or at both ends of the main body, respectively. During the charging and discharging process of the battery, the positive and negative active substances react with the electrolyte, and the electrode tabs are connected to the electrode terminals to form a current circuit.

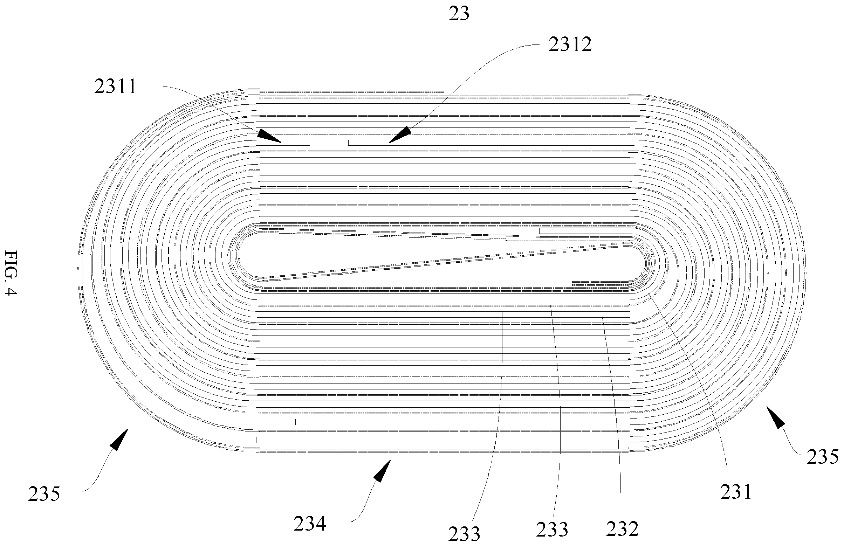

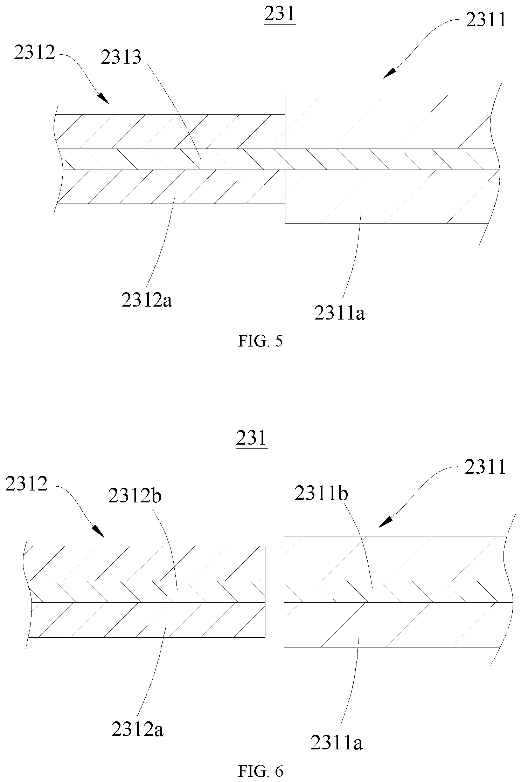

According to some embodiments of the present disclosure, referring to FIGs. 4 to 6, FIG. 4 is a structural schematic diagram of the electrode assembly 23 provided in some embodiments of the present disclosure, FIG. 5 is a structural schematic diagram of the first electrode plate 231 provided in some embodiments of the present disclosure, and FIG. 6 is a structural schematic diagram of the first electrode plate 231 provided in some other embodiments of the present disclosure. The present disclosure provides an electrode assembly 23, which includes a first electrode plate 231 and a second electrode plate 232 with opposite polarity. The first electrode plate 231 and the second electrode plate 232 are stacked and form an electrode assembly 23 along the winding direction. The first electrode plate 231 includes the first segment 2311 and the second segment 2312. The first segment 2311 is equipped with a first active substance layer 2311a, and the second segment 2312 is equipped with a second active substance layer 2312a. Along the winding direction from inside to outside, the first segment 2311 is located upstream of the second segment 2312.

The polarity of the first electrode plate 231 and the second electrode plate 232 is opposite. The first electrode plate 231 can be a negative electrode plate, and the second electrode plate 232 can be a positive electrode plate, or the first electrode plate 231 can be a positive electrode plate, and the second electrode plate 232 can be a negative electrode plate. The embodiment of the present disclosure takes the first electrode plate 231 being the negative electrode plate and the second electrode plate 232 being the positive electrode plate as an example for explanation.

The first segment 2311 and the second segment 2312 are the two parts that form the first electrode plate 231. The first segment 2311 and the second segment 2312 are arranged in a winding direction from the inside to the outside. The first segment 2311 and the second segment 2312 can be formed integrally, or the first segment 2311 and the second segment 2312 can also be set separately. Along the winding direction, the first segment 2311 and the second segment 2312 can partially overlap, or, as shown in FIG. 5, the tail of the first segment 2311 fits with the head of the second segment 2312, or, as shown in FIGs. 4 and 6, there is a gap between the first segment 2311 and the second segment 2312. Optionally, the tail of the first segment 2311 fits with the head of the second segment 2312, or there is a gap between the first segment 2311 and the second segment 2312, but the gap is relatively small. In this case, the first segment 2311 and the second segment 2312 do not overlap to avoid the overlap region of the first segment 2311 and the second segment 2312 from increasing the thickness of the electrode assembly 23 and thus reducing space occupation.

The first segment 2311 is located upstream of the second segment 2312, which means that when winding and forming the electrode assembly 23, the first segment 2311 is wound before the second segment 2312, so that the first segment 2311 is closer to the winding center relative to the second segment 2312.

The first segment 2311 is the part of the first electrode plate 231 located on the inner side of the electrode assembly 23, that is, the part of the first electrode plate 231 close to the winding center. The second segment 2312 is the part of the first electrode plate 231 located on the outer side of the electrode assembly 23, that is, the part of the first electrode plate 231 away from the winding center. The first segment 2311 is of a winding structure, and the number of turns of the first segment 2311 is greater than or equal to one, that is, the first segment 2311 has at least two bending regions 235. The second segment 2312 is of a winding structure, and the number of turns of the second segment 2312 is greater than one, that is, the second segment 2312 has multiple bending regions 235.

According to the electrode assembly 23 of the embodiment of the present disclosure, the first electrode plate 231 includes a first segment 2311 and a second segment 2312, and along the winding direction from inside to outside, the first segment 2311 is located upstream of the second segment 2312. By dividing the first electrode plate 231 into the first segment 2311 and the second segment 2312, different treatments can be performed on the first segment 2311 in the inner circle and the second segment 2312 in the outer circle, respectively, such that the first and second segments 2311 and 2312 have different physical or chemical properties, and the performance of electrode assembly 23 can be better adjusted through internal and external differential configuration to meet different performance requirements.

According to some embodiments of the present disclosure, the coating density of the first active substance layer 2311a is different from that of the second active substance layer 2312a.

The coating density of the first active substance layer 2311a refers to the coating weight of the active substance material of the first active substance layer 2311 a on a unit surface area. The coating density of the second active substance layer 2312a refers to the coating weight of the active substance material in the second active substance layer 2312a on a unit surface area.

The coating density of the first active substance layer 2311 a is different from that of the second active substance layer 2312a, such that the energy density of the electrode assembly 23 can be adjusted to meet the different energy density requirements of the electrode assembly.

According to some embodiments of the present disclosure, the coating density of the first active substance layer 2311a is lower than that of the second active substance layer 2312a.

The electrode assembly 23 includes a straight region 234 and bending regions 235 located at both ends of the straight region 234. The straight region 234 refers to the region in the electrode assembly 23 that is of a parallel structure, that is, the surfaces of the first electrode plate 231, the second electrode plate 232, and the separator within the straight region 234 are all flat. The bending region 235 refers to the region in the electrode assembly 23 that is of a bending structure, that is, the first electrode plate 231, the second electrode plate 232, and the separator within the bending region 235 are all bent. That is to say, the electrode assembly 23 is curved at the surface of each layer of the first electrode plate 231, the second electrode plate 232, and the separator in the bending region 235.

The coating density of the first active substance layer 2311a is less than that of the second active substance layer 2312a, and the fracture toughness of the first segment 2311 is greater than the fracture toughness of the second segment 2312, which makes the bending region 235 of the first segment 2311 not easy to crack or fracture, thereby reducing the probability of crack or fracture of the first electrode plate 231, and thus improving the safety of the battery cell 20 composed of the electrode assembly 23.

According to some embodiments of the present disclosure, the coating density of the second active substance layer 2312a is 10%-200% larger than that of the first active substance layer 2311a.

The coating density of the second active substance layer 2312a is H2, and the coating density of the first active substance layer 2311a is H1, which meets 0.1 ≤ (H2-H1)/H1 ≤ 2.

The coating density of the second active substance layer 2312a is higher than that of the first active substance layer 2311a, thereby ensuring that the first electrode plate 231 has more active substances, thereby ensuring that the battery cell 20 composed of the electrode assembly 23 has a higher energy density.

Optionally, the coating density of the second active substance layer 2312a is 20%-150% larger than that of the first active substance layer 2311a.

Optionally, the coating density of the second active substance layer 2312a is 40%-120% larger than that of the first active substance layer 2311a.

Optionally, the coating density of the second active substance layer 2312a is 30%, 50%, 60%, 70%, 100%, 130%, 150%, or 180% larger than that of the first active substance layer 2311a.

According to some embodiments of the present disclosure, the ratio of the thickness of the first active substance layer 2311a to the thickness of the second active substance layer 2312a is 1/2-3/2.

The thickness of the first active substance layer 2311a is D1, and the thickness of the second active substance layer 2312a is D2, which meets 1/2 ≤ D1/D2 ≤ 3/2. In other words, the thickness of the first active substance layer 2311a and the thickness of the second active substance layer 2312a are close to each other.

For example, D1/D2 can be 5/8, 3/4, 7/8, 1, 9/8, 5/4, 11/8, etc.

When the coating density of the first active substance layer 2311a is lower than that of the second active substance layer 2312a, the ratio of the thickness of the first active substance layer 2311a to the thickness of the second active substance layer 2312a meets the above range, thereby ensuring that there are no steps at the transition between the first segment 2311 and the second segment 2312, avoiding the shedding of active substances or causing indentation, and thus ensuring the quality of the electrode assembly 23.

According to some embodiments of the present disclosure, the active substance material of the first active substance layer 2311a is the same as or different from the active substance material of the second active substance layer 2312a.

The active substance material of the first active substance layer 2311a is different from the active substance material of the second active substance layer 2312a, such that the performance of the first and second segments 2311 and 2312 can be adjusted to meet the different physical or chemical properties of electrode assembly 23.

For example, the first active substance layer 2311a and the second active substance layer 2312a can use the same formula, for example, using the same type of active substance material and the same ratio of active substance material. Alternatively, different formulations can be used for the first active substance layer 2311a and the second active substance layer 2312a, for example, using the same type of active substance material with different ratios of active substance material. Alternatively, the first active substance layer 2311a and the second active substance layer 2312a may use different types of active substance materials, such as different chemical systems.

Taking the active substance material of the first active substance layer 2311a and the active substance material of the second active substance layer 2312a being the negative electrode active substance material as an example, the negative electrode active substance material can be at least one of graphite (artificial graphite, or natural graphite), amorphous carbon (soft carbon, hard carbon, or other amorphous carbon), and lithium titanate. Taking the active substance material of the first active substance layer 2311 a and the active substance material of the second active substance layer 2312a being the positive electrode active substance material as an example, the positive electrode active substance material can be at least one of lithium cobalt oxide, lithium manganese oxide, lithium iron phosphate, lithium nickel cobalt manganese oxide, lithium manganese oxide with enriched lithium, and lithium nickel cobalt aluminate.

According to some embodiments of the present disclosure, the tail of the first segment 2311 is connected to the head of the second segment 2312 along the winding direction from inside to outside; or, as shown in FIGs. 4 and 6, a gap is provided between the tail of the first segment 2311 and the head of the second segment 2312.

The tail of the first segment 2311 refers to the end portion of the first segment 2311 along the winding direction. In other words, the tail of the first segment 2311 refers to the ending part of the first segment 2311. The head of the second segment 2312 refers to the head portion of the second segment 2312 along the winding direction. In other words, the head of the second segment 2312 refers to the starting part of the second segment 2312.

In the embodiment where the tail of the first segment 2311 is connected to the head of the second segment 2312, it is convenient to ensure the continuity of the first electrode plate 231. The first electrode plate 231 has more active substances, thereby ensuring that the electrode assembly 23 has a higher energy density. In the embodiment where there is a gap between the tail of the first segment 2311 and the head of the second segment 2312, it can facilitate the processing of the first segment 2311 and the second segment 2312, and thus reduce the manufacturing difficulty of the first electrode plate 231.

According to some embodiments of the present disclosure, as shown in FIG. 5, the first electrode plate 231 further includes a first current collector 2313, wherein the first active substance layer 2311a and the second active substance layer 2312a are respectively provided on the first current collector 2313.

The first current collector 2313 is in a continuous stripped structure, with the first active substance layer 2311a and the second active substance layer 2312a respectively located on the first current collector 2313. In this case, the first segment 2311 is the region with a lower coating density of the active substance layer of the first electrode plate 231, and the second segment 2312 is the region with a higher coating density of the active substance layer of the first electrode plate 231. During the preparation process of the first electrode plate 231, when rolling the active substance layer, the distance between a pair of rollers is adjusted to change the rolling pressure of the pair of rollers to the first electrode plate 231. The region with lower coating density of the active substance layer forms the first segment 2311, and the region with higher coating density of the active substance layer forms the second segment 2312.

According to some embodiments of the present disclosure, as shown in FIG. 6, the first electrode plate 231 further includes a first current collector segment 2311b and a second current collector segment 2312b. The first active substance layer 2311a is arranged on the first current collector segment 2311b to form the first segment 2311, and the second active substance layer 2312a is arranged on the second current collector segment 2312b to form the second segment 2312.

The first current collector segment 2311b and the second current collector segment 2312b are two different current collector segments. In this case, the first segment 2311 and the second segment 2312 are two disconnected parts.

The first active substance layer 2311a is arranged on the first current collector segment 2311b to form the first segment 2311, and the second active substance layer 2312a is arranged on the second current collector segment 2312b to form the second segment 2312, which facilitates the processing and manufacturing of the first segment 2311 and the second segment 2312, and thus reduces the manufacturing difficulty of the first electrode plate 231.

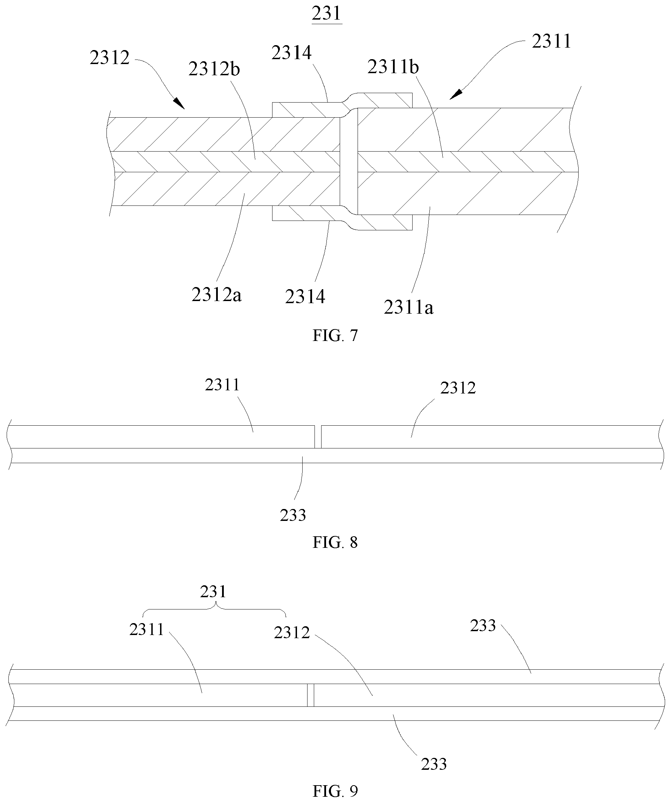

Referring to FIG. 7, FIG. 7 is a schematic diagram of the first segment 2311 and the second segment 2312 connected through the first connecting part 2314 provided in some embodiments of the present disclosure. According to some embodiments of the present disclosure, as shown in FIG. 7, the tail of the first segment 2311 and the head of the second segment 2312 are connected through the first connecting part 2314.

The first connecting part 2314 is a connecting component configured to connect the first segment 2311 and the second segment 2312. The first connecting part 2314 can be adhesive tape or a separator with an adhesive layer. The first connecting part 2314 can be made of materials through which ions can pass, thereby allowing the active material covered by the first connecting part 2314 to play a role, which is beneficial for improving energy density. The first connecting part 2314 can be located on one side of the first segment 2311 and the second segment 2312, or, as shown in FIG. 7, the first connecting part 2314 can be located on two sides of the first segment 2311 and the second segment 2312.

By connecting the first segment 2311 and the second segment 2312 through the first connecting part, the positioning for the first segment 2311 and the second segment 2312 is achieved, and the position movement of the first segment 2311 and the second segment 2312 is restricted. When the first segment 2311 is wound, the first segment 2311 can drive the second segment 2312 through the first connecting part 2314, thereby providing the winding power for the second segment 2312, and achieving the sequential winding of the first segment 2311 and the second segment 2312.

Referring to FIG. 8, FIG. 8 is a schematic diagram of the connection between the first segment 2311 and the second segment 2312 and the separator 233 provided in some embodiments of the present disclosure. According to some embodiments of the present disclosure, as shown in FIGs. 4 and 8, the electrode assembly 23 further includes a separator 233, which is used to separate the first electrode plate 231 and the second electrode plate 232.

The separator 233 is arranged between the first electrode plate 231 and the second electrode plate 232. The separator 233 is in an electrically insulated membrane structure, which can insulate and isolate the first electrode plate 231 and the second electrode plate 232, thereby separating the first electrode plate 231 and the second electrode plate 232.

By separating the first electrode plate 231 and the second electrode plate 232 through a separator 233, the contact short circuit between the first electrode plate 231 and the second electrode plate 232 is avoided, thereby improving safety.

According to some embodiments of the present disclosure, the head of the second segment 2312 is connected to the separator 233.

The head of the second segment 2312 is connected to the separator 233, which enables the positioning of the head of the second segment 2312 by the separator 233, thereby limiting the position movement of the first segment 2311 and the second segment 2312. When winding and forming the electrode assembly 23, the separator 233 can drive the head of the second segment 2312 to be wound, thereby providing winding power for the second segment 2312, so as to achieve the sequential winding of the first segment 2311 and the second segment 2312.

According to some embodiments of the present disclosure, as shown in FIG. 8, both the first segment 2311 and the second segment 2312 are connected to the separator 233.

The first segment 2311 and the second segment 2312 are connected to the separator 233, and the positioning of the first segment 2311 and the second segment 2312 is achieved through the separator 233, which limits the position movement of the first segment 2311 and the second segment 2312, reduces the risk of contact short circuit between the first electrode plate 231 and the second electrode plate 232, and ensures the safety of the battery cell 20 composed of the electrode assembly 23.

Referring to FIG. 9, FIG. 9 is a schematic diagram of the connection between the first segment 2311 and the second segment 2312 and the separator 233 provided in some other embodiments of the present disclosure. According to some embodiments of the present disclosure, as shown in FIGs. 4 and 9, the electrode assembly 23 may include two separators 233, each located on both sides of the first electrode plate 231, and the first electrode plate 231 is connected to the two separators 233. In other words, by connecting the first segment 2311 and the second segment 2312 through two separators 233, the positioning of the first segment 2311 and the second segment 2312 is achieved.

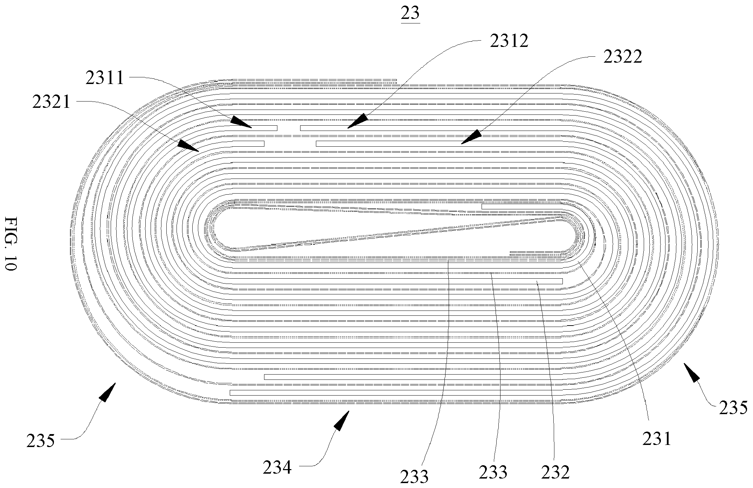

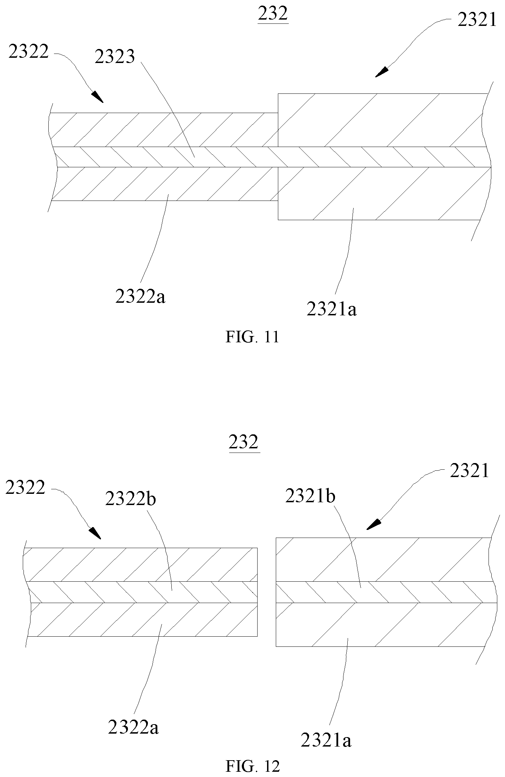

Referring to FIGs. 10 to 12, FIG. 10 is a structural schematic diagram of the electrode assembly 23 provided in some other embodiments of the present disclosure; FIG. 11 is a structural schematic diagram of the second electrode plate 232 provided in some embodiments of the present disclosure; and FIG. 12 is a structural schematic diagram of the second electrode plate 232 provided in some other embodiments of the present disclosure. According to some embodiments of the present disclosure, the second electrode plate 232 includes a third segment 2321 and a fourth segment 2322, wherein the third active substance layer 2321a is arranged on the third segment 2321; and the fourth active substance layer 2322a is arranged on the fourth segment 2322, wherein along the winding direction from inside to outside, the third segment 2321 is located upstream of the fourth segment 2322.

The third segment 2321 and the fourth segment 2322 are two parts that form the second electrode plate 232. The third segment 2321 and the fourth segment 2322 are arranged along the winding direction from inside to outside. The third segment 2321 and the fourth segment 2322 can be formed integrally, or the third segment 2321 and the fourth segment 2322 can be set separately. Along the winding direction, the third segment 2321 and the fourth segment 2322 can overlap, or, as shown in FIG. 11, the tail of the third segment 2321 and the head of the fourth segment 2322 fit together, or, as shown in FIG. 12, there is a gap between the third segment 2321 and the fourth segment 2322. Optionally, the tail of the third segment 2321 fits with the head of the fourth segment 2322, or there is a gap between the third segment 2321 and the fourth segment 2322, but the gap is relatively small. In this case, the third segment 2321 and fourth segment 2322 do not overlap to avoid the overlap region of the third segment 2321 and the fourth segment 2322 from increasing the thickness of the electrode assembly 23 and thus reducing space occupation.

The third segment 2321 is located upstream of the fourth segment 2322, which means that when winding and forming the electrode assembly 23, the third segment 2321 is wound before the fourth segment 2322, so that the third segment 2321 is closer to the winding center relative to the fourth segment 2322.

The third segment 2321 is the part of the second electrode plate 232 located on the inner side of the electrode assembly 23, that is, the part of the second electrode plate 232 close to the winding center; and the fourth segment 2322 is the part of the second electrode plate 232 located on the outer side of the electrode assembly 23, that is, the part of the second electrode plate 232 away from the winding center. The third segment 2321 is in a winding structure, and the number of turns in the third segment 2321 is greater than or equal to one, that is, the third segment 2321 has at least two bending regions 235. The fourth segment 2322 is in a winding structure, and the number of turns in the fourth segment 2322 is greater than one, that is, the fourth segment 2322 has multiple bending regions 235.

By dividing the second electrode plate 232 into the third segment 2321 and the fourth segment 2322, different treatments can be applied to the third segment 2321 located in the inner circle and the fourth segment 2322 located in the outer circle, respectively, so that the third segment 2321 and the fourth segment 2322 have different physical or chemical properties. The performance of electrode assembly 23 can be better adjusted through internal and external differential configuration to adapt to different usage environments.

According to some embodiments of the present disclosure, the coating density of the third active substance layer 2321a is different from that of the fourth active substance layer 2322a; and/or, the thickness of the third active substance layer 2321a is different from that of the fourth active substance layer 2322a; and/or, the active substance material of the third active substance layer 2321a is the same as or different from the active substance material of the fourth active substance layer 2322a.

The coating density of the third active substance layer 2321a refers to the coating weight of the active substance material of the third active substance layer 2321a on a unit surface area. The coating density of the fourth active substance layer 2322a refers to the coating weight of the active substance material of the fourth active substance layer 2322a on a unit surface area.

The physical or chemical properties of the third segment 2321 and the fourth segment 2322 can be changed by changing the coating density, thickness, and active substance material formula of the third active substance layer 2321a and fourth active substance layer 2322a, so that the electrode assembly 23 can meet different performance requirements and be suitable for different usage scenarios.

According to some embodiments of the present disclosure, the coating density of the third active substance layer 2321a is lower than that of the fourth active substance layer 2322a.

The coating density of the third active substance layer 2321a is less than that of the fourth active substance layer 2322a, and the fracture toughness of the third segment 2321 is greater than the fracture toughness of the fourth segment 2322, so as to make the bending region 235 of the third segment 2321 not prone to crack or fracture, and reduce the probability of crack or fracture of the second electrode plate 232, thereby improving the safety of the battery cell 20 composed of the electrode assembly 23.

According to some embodiments of the present disclosure, the coating density of the fourth active substance layer 2322a is 10%-200% larger than that of the third active substance layer 2321a.

The coating density of the fourth active substance layer 2322a is H4, and the coating density of the third active substance layer 2321a is H3, which meets 0.1 ≤ (H4-H3)/H3 ≤ 2.

The coating density of the fourth active substance layer 2322a is higher than that of the third active substance layer 2321a, thereby ensuring that the second electrode plate 232 has more active substances, thereby ensuring that the battery cell 20 composed of the electrode assembly 23 has a higher energy density.

Optionally, the coating density of the fourth active substance layer 2322a is 20%-150% larger than that of the third active substance layer 2321a.

Optionally, the coating density of the fourth active substance layer 2322a is 40%-120% larger than that of the third active substance layer 2321a.

Optionally, the coating density of the fourth active substance layer 2322a is 30%, 50%, 60%, 70%, 100%, 130%, 150%, or 180% larger than that of the third active substance layer 2321a.

According to some embodiments of the present disclosure, the third active substance layer 2321a and the fourth active substance layer 2322a can use the same formula, for example, using the same type of active substance material and the same ratio of active substance material. Alternatively, different formulations can be used for the third active substance layer 2321a and the fourth active substance layer 2322a, for example, using the same type of active substance material with different ratios of active substance material. Alternatively, the third active substance layer 2321a and the fourth active substance layer 2322a may use different types of active substance materials, such as different chemical systems.

Taking the active substance material of the third active substance layer 2321a and the active substance material of the fourth active substance layer 2322a being the negative electrode active substance material as an example, the negative electrode active substance material can be at least one of graphite (artificial graphite, or natural graphite), amorphous carbon (soft carbon, hard carbon, or other amorphous carbon), and lithium titanate. Taking the active substance material of the third active substance layer 2321a and the active substance material of the fourth active substance layer 2322a being the positive electrode active substance material as an example, the positive electrode active substance material can be at least one of lithium cobalt oxide, lithium manganese oxide, lithium iron phosphate, lithium nickel cobalt manganese oxide, lithium manganese oxide with enriched lithium, and lithium nickel cobalt aluminate.

According to some embodiments of the present disclosure, the ratio of the thickness of the third active substance layer 2321a to the thickness of the fourth active substance layer 2322a is 1/2-3/2.

The thickness of the third active substance layer 2321a is D3, and the thickness of the fourth active substance layer 2322a is D4, which meets 1/2 ≤ D3/D4 ≤ 3/2. In other words, the thickness of the third active substance layer 2321a and the thickness of the fourth active substance layer 2322a are close to each other.

For example, D1/D2 can be 5/8, 3/4, 7/8, 1, 9/8, 5/4, 11/8, etc.

When the coating density of the third active substance layer 2321a is lower than that of the fourth active substance layer 2322a, the ratio of the thickness of the third active substance layer 2321a to the thickness of the fourth active substance layer 2322a meets the above range, thereby ensuring that there are no steps at the transition between the third segment 2321 and the fourth segment 2322, avoiding the shedding of active substances or causing indentation, and thus ensuring the quality of the electrode assembly 23.

According to some embodiments of the present disclosure, along the winding direction from inside to outside, the tail of the third segment 2321 is connected to the head of the fourth segment 2322, or, as shown in FIG. 12, there is a gap between the tail of the third segment 2321 and the head of the fourth segment 2322.

The tail of the third segment 2321 refers to the end portion of the third segment 2321 along the winding direction. In other words, the tail of the third segment 2321 refers to the ending part of the third segment 2321. The head of the fourth segment 2322 refers to the head portion of the fourth segment 2322 along the winding direction. In other words, the head of the fourth segment 2322 refers to the starting part of the fourth segment 2322.

In the embodiment where the tail of the third segment 2321 is connected to the head of the fourth segment 2322, it is convenient to ensure the continuity of the second electrode plate 232. The second electrode plate 232 has more active substances, thereby ensuring that the electrode assembly 23 has a higher energy density. In the embodiment where there is a gap between the tail of the third segment 2321 and the head of the fourth segment 2322, it can facilitate the processing of the third segment 2321 and the fourth segment 2322, and thus reduce the manufacturing difficulty of the second electrode plate 232.

According to some embodiments of the present disclosure, as shown in FIG. 11, the second electrode plate 232 further includes a second current collector 2323, with the third active substance layer 2321a and the fourth active substance layer 2322a respectively located on the second current collector 2323.

The second current collector 2323 is in a continuous stripped structure, with the third active substance layer 2321a and the fourth active substance layer 2322a respectively located on the second current collector 2323. In this case, the third segment 2321 is the region with a lower coating density of the active substance layer of the second electrode plate 232, and the fourth segment 2322 is the region with a higher coating density of the active substance layer of the second electrode plate 232. During the preparation process of the second electrode plate 232, when rolling the active substance layer, the distance between a pair of rollers is adjusted to change the rolling pressure of the pair of rollers to the second electrode plate 232. The region with lower coating density of the active substance layer forms the third segment 2321, and the region with higher coating density of the active substance layer forms the fourth segment 2322.

According to some embodiments of the present disclosure, as shown in FIG. 12, the second electrode plate 232 further includes a third current collector segment 2321b and a fourth current collector segment 2322b, wherein the third active substance layer 2321a is arranged on the third current collector segment 2321b to form the third segment 2321, and the fourth active substance layer 2322a is arranged on the fourth current collector segment 2322b to form the fourth segment 2322.

The third current collector segment 2321b and the fourth current collector segment 2322b are two different current collector segments. In this case, the third current collector segment 2321b and the fourth current collector segment 2322b are the two disconnected parts.

The third active substance layer 2321a is arranged on the third current collector segment 2321b to form the third segment 2321, and the fourth active substance layer 2322a is arranged on the fourth current collector segment 2322b to form the fourth segment 2322, which facilitates the processing and manufacturing of the third segment 2321 and the fourth segment 2322, and thus reduces the manufacturing difficulty of the second electrode plate 232.

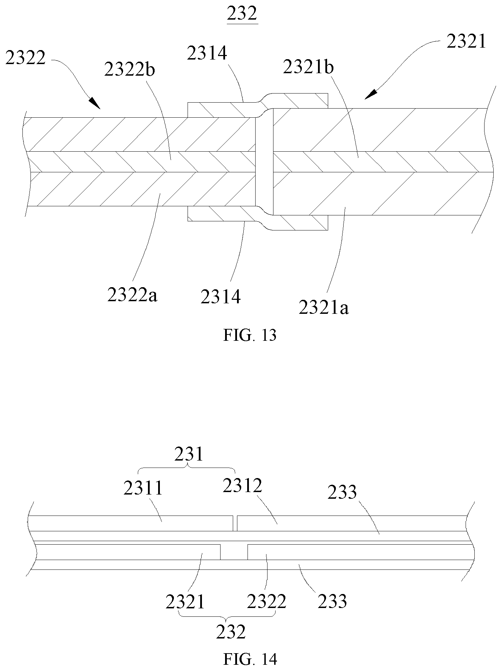

Referring to FIG. 13, FIG. 13 is a schematic diagram of the third segment 2321 and fourth segment 2322 connected through the second connecting part 2324 provided in some embodiments of the present disclosure. According to some embodiments of the present disclosure, the tail of the third segment 2321 and the head of the fourth segment 2322 are connected through the second connecting part 2324.

The second connecting part 2324 is a connecting component configured to connect the third segment 2321 and the fourth segment 2322. The second connecting part 2324 can be adhesive tape or a separator with an adhesive layer. The second connecting part 2324 can be made of materials through which ions can pass, thereby allowing the active material covered by the second connecting part 2324 to play a role, which is beneficial for improving energy density. The second connecting part 2324 can be located on one side of the third segment 2321 and the fourth segment 2322, or, as shown in FIG. 13, the second connecting part 2324 can be located on two sides of the third segment 2321 and the fourth segment 2322.

By connecting the third segment 2321 and the fourth segment 2322 through the second connecting part 2324, the positioning of the third segment 2321 and the fourth segment 2322 is achieved, thereby limiting the position movement of the third segment 2321 and the fourth segment 2322. When the third segment 2321 is wound, the third segment 2321 can drive the fourth segment 2322 through the second connecting part 2324, thereby providing winding power for the fourth segment 2322, and further achieving the sequential winding of the third segment 2321 and the fourth segment 2322.

According to some embodiments of the present disclosure, as shown in FIG. 10, the electrode assembly further includes a separator 233, which is used to separate the first electrode plate 231 and the second electrode plate 232. The head of the fourth segment 2322 is connected to the separator 233.

The head of the fourth segment 2322 is connected to separator 233, which enables the positioning of the fourth segment 2322 through the separator 233, thereby limiting the position movement of the third segment 2321 and the fourth segment 2322. During winding, separator 233 can drive the head of the fourth segment 2322 to be wound, thereby providing winding power for the fourth segment 2322, so as to achieve the sequential winding of the third segment 2321 and the fourth segment 2322.

According to some embodiments of the present disclosure, the electrode assembly 23 includes two separators 233, each located on both sides of the second electrode plate 232. The head of the second segment 2312 is connected to one separator 233, and the head of the fourth segment 2322 is connected to another separator 233.

One separator 233 is connected to the head of the second segment 2312, and the other separator 233 is connected to the head of the fourth segment 2322. One separator 233 limits the position of the second segment 2312, and the other separator 233 limits the position of the fourth segment 2322. When winding and forming electrode assembly 23, one separator 233 can drive the head of the second segment 2312 to be wound, thereby providing winding power for the second segment 2312 to achieve the sequential winding of the first segment 2311 and the second segment 2312. Another separator 233 can drive the head of the fourth segment 2322 to be wound, thereby providing winding power for the fourth segment 2322 to achieve the sequential winding of the third segment 2321 and the fourth segment 2322.

Referring to FIG. 14, FIG. 14 is a schematic diagram of the connection between the first electrode plate 231, the second electrode plate 232, and the separator 233 provided in some embodiments of the present disclosure. According to some embodiments of the present disclosure, as shown in FIGs. 10 and 14, the electrode assembly 23 further includes a separator 233, which is used to separate the first electrode plate 231 and the second electrode plate 232. The third segment 2321 and the fourth segment 2322 are both connected to the separator 233.

The separator 233 is arranged between the first electrode plate 231 and the second electrode plate 232, which is in an electrically insulated membrane structure to separate the first electrode plate 231 and the second electrode plate 232.

The third segment 2321 and the fourth segment 2322 are connected to the separator 233, and the positioning of the third segment 2321 and the fourth segment 2322 is achieved through the separator 233, which limits the position movement of the third segment 2321 and the fourth segment 2322, reduces the risk of contact short circuit between the first electrode plate 231 and the second electrode plate 232, and ensures the safety of the battery cell 20 composed of the electrode assembly 23.

According to some embodiments of the present disclosure, as shown in FIGs. 10 and 14, the electrode assembly 23 includes two separators 233, each located on both sides of the second electrode plate 232. The first segment 2311 and the second segment 2312 are both connected to one separator 233, while the third segment 2321 and the fourth segment 2322 are both connected to the other separator 233.

When the electrode assembly 23 is wound and formed, the stacking method of two separators 233 with the first electrode plate 231 and the second electrode plate 232 can be: separator 233, first electrode plate 231, separator 233 and the second electrode plate 232, or the first electrode plate 231, separator 233, second electrode plate 232 and separator 233.

One separator 233 connects the first segment 2311 and the second segment 2312, while the other separator 233 connects the third segment 2321 and the fourth segment 2322, thereby ensuring that the first segment 2311 and the second segment 2312 are positioned by one separator 233, and the third segment 2321 and the fourth segment 2322 are positioned by another separator 233. One separator 233 restricts the positions of the first segment 2311 and the second segment 2312, and the other separator 233 restricts the positions of the third segment 2321 and the fourth segment 2322, so as to reduce the risk of contact short circuit between the first electrode plate 231 and the second electrode plate 232, and ensure the safety of the battery cell 20 composed of electrode assembly 23.

According to some embodiments of the present disclosure, the number of turns in the third segment 2321 is less than the number of turns in the fourth segment 2322.

The number of turns in the third segment 2321 refers to the number of turns of winding in the third segment 2321. One turn (circle/round) means that the third segment 2321 is wound along the winding direction with a certain point on the third segment 2321 as the starting point, and when the third segment 2321 first covers the starting point, the part wound by the third segment 2321 is one turn.

Similarly, the number of turns in the fourth segment 2322 refers to the number of turns of winding in the fourth segment 2322. One turn (circle/round) means that the fourth segment 2322 is wound along the winding direction with a certain point on the fourth segment 2322 as the starting point, and when the fourth segment 2322 first covers the starting point, the part wound by the fourth segment 2322 is one turn.

The number of turns in the third segment 2321 is smaller than that in the fourth segment 2322. In other words, the number of turns of winding in the fourth segment 2322 is greater than that in the third segment 2321. Due to the coating density of the fourth active substance layer 2322a being higher than that of the third active substance layer 2321a, under the same thickness of electrode assembly 23, the number of turns of winding in the fourth segment 2322 is more, which can ensure that electrode assembly 23 has a higher energy density.

According to some embodiments of the present disclosure, the number of turns in the third segment 2321 is 1-5.

The number of turns in the third segment 2321 is 1-5, which can not only reduce the probability of cracks or fractures in the region near the winding center of the second electrode plate 232, but also ensure the energy density of the battery cell 20 composed of the electrode assembly 23. If the number of turns in the third segment 2321 is too small, the bending region 235 near the winding center of the second electrode plate 232 is prone to cracking or fracture, which affects the safety of the battery cell 20 composed of electrode assembly 23. Due to the low coating density of the third active substance layer 2321a, if the number of turns in the third segment 2321 is too large, it will affect the energy density of the battery cell 20 composed of electrode assembly 23.

According to some embodiments of the present disclosure, the number of turns in the first segment 2311 is less than the number of turns in the second segment 2312.

The number of turns in the first segment 2311 refers to the number of turns of winding in the first segment 2311. One turn (circle/round) means that the first segment 2311 is wound along the winding direction with a certain point on the first segment 2311 as the starting point, and when the first segment 2311 first covers the starting point, the part wound by the first segment 2311 is one turn.

Similarly, the number of turns in the second segment 2312 refers to the number of turns of winding in the second segment 2312. One turn (circle/round) means that the second segment 2312 is wound along the winding direction with a certain point on the second segment 2312 as the starting point, and when the second segment 2312 first covers the starting point, the part wound by the second segment 2312 is one turn.

The number of turns in the first segment 2311 is smaller than that in the second segment 2312. In other words, the number of turns of winding in the second segment 2312 is greater than that in the first segment 2311. Due to the coating density of the second active substance layer 2312a being higher than that of the first active substance layer 2311a, under the same thickness of electrode assembly 23, the number of turns of winding in the second segment 2312 is more, which can ensure that electrode assembly 23 has a higher energy density.

According to some embodiments of the present disclosure, the number of turns in the first segment 2311 is 1-5.

The number of turns in the first segment 2311 is 1-5, which can not only reduce the probability of cracks or fractures in the region near the winding center of the first electrode plate 231, but also ensure the energy density of the battery cell 20 composed of the electrode assembly 23. If the number of turns in the first segment 2311 is too small, the bending region 235 near the winding center of the first electrode plate 231 is prone to cracking or fracture, which affects the safety of the battery cell 20 composed of electrode assembly 23. Due to the low coating density of the first active substance layer 2311a, if the number of turns in the first segment 2311 is too large, it will affect the energy density of the battery cell 20 composed of electrode assembly 23.

According to some embodiments of the present disclosure, the present disclosure also provides a battery cell 20, including an electrode assembly 23 as described in any one of the above solutions.

According to some embodiments of the present disclosure, the present disclosure also provides a battery 100, including the battery cell 20 as described in any one of the above solutions.

According to some embodiments of the present disclosure, the present disclosure also provides an electrical equipment, including a battery 100 as described in any one of the above solutions, and the battery 100 is used to provide electrical energy to the electrical equipment.

The electrical equipment can be any of the aforementioned devices or systems that use battery 100.

According to some embodiments of the present disclosure, referring to FIGs. 3 to 14, the present disclosure provides a battery cell 20, which includes an end cover 21, a shell 22, an electrode assembly 23, and an electrode terminal 24. The electrode assembly 23 is arranged inside the shell 22, the electrode terminal 24 is arranged on the end cover 21, and the end cover 21 covers the opening of the shell 22. The electrode assembly 23 includes a first electrode plate 231, a second electrode plate 232, and a separator 233. The first electrode plate 231, the separator 233, and the second electrode plate 232 are wound along the winding direction to form the electrode assembly 23. The first electrode plate 231 includes the first segment 2311 and the second segment 2312. The first segment 2311 is equipped with a first active substance layer 2311a, and the second segment 2312 is equipped with a second active substance layer 2312a. Along the winding direction from inside to outside, the first segment 2311 is located upstream of the second segment 2312. The coating density of the first active substance layer 2311a is less than that of the second active substance layer 2312a. The second electrode plate 232 includes a third segment 2321 and a fourth segment 2322, wherein the third active substance layer 2321a is arranged on the third segment 2321; and the fourth active substance layer 2322a is arranged on the fourth segment 2322, wherein along the winding direction from inside to outside, the third segment 2321 is located upstream of the fourth segment 2322. The coating density of the third active substance layer 2321a is less than that of the fourth active substance layer 2322a. Two separators 233 are provided, which are used to separate the first electrode plate 231 and the second electrode plate 232. The first segment 2311 and the second segment 2312 are connected to one separator 233, and the third segment 2321 and the fourth segment 2322 are connected to another separator 233.

In the electrode assembly 23 that constitutes the battery cell 20, the coating density of the first active substance layer 2311a is relatively low, and the coating density of the third active substance layer 2321a is relatively low, which reduces the probability of cracks or fractures in the bending region 235 near the winding center of the first electrode plate 231, and reduces the probability of cracks or fractures in the bending region 235 near the winding center of the second electrode plate 232, thereby improving the safety of the battery cell 20.

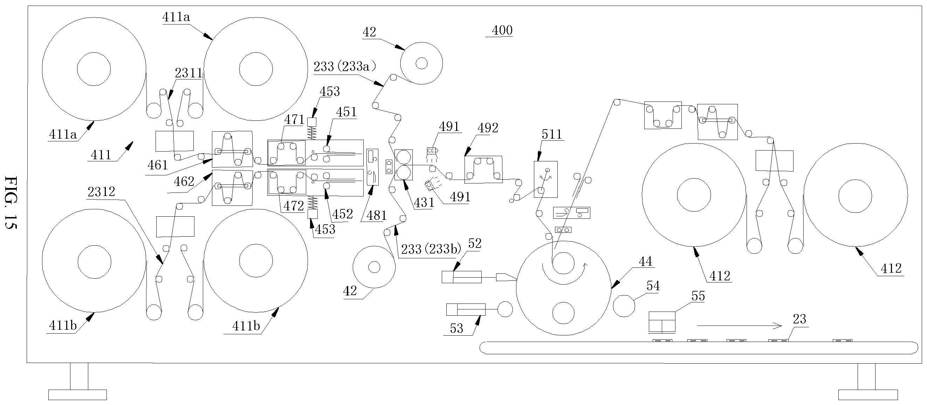

According to some embodiments of the present disclosure, referring to FIG. 15, FIG. 15 is a structural schematic diagram of the winding equipment 400 provided in some embodiments of the present disclosure. The present disclosure provides a winding equipment 400. The winding equipment 400 includes a first providing device 411, a second providing device 412, a separator providing mechanism 42, and a winding mechanism 44. The first providing device 411 is configured to provide a first electrode plate 231, as shown in FIGs. 4 to 6. The first electrode plate 231 includes a first segment 2311 and a second segment 2312, with a first active substance layer 2311a provided on the first segment 2311 and a second active substance layer 2312a provided on the second segment 2312. The second providing device 412 is configured to provide a second electrode plate 232 with an opposite polarity to the first electrode plate 231. The separator providing mechanism 42 is configured to provide the separator 233. The winding mechanism 44 is located downstream of the first providing device 411, the second providing device 412, and the separator providing mechanism 42. The winding mechanism 44 is configured to wind the first segment 2311, the second segment 2312, the separator 233, and the second electrode plate 232 along the winding direction to form the electrode assembly 23. In the above, the first providing device 411 is configured to provide the first electrode plate 231 by causing the first segment 2311 to enter the winding mechanism 44 first and causing the second segment 2312 to enter the winding mechanism 44 after the first segment 2311.

The upstream and downstream mentioned in the present disclosure refer to the position relationship in the winding and forming process for electrode assembly 23. For example, the winding mechanism 44 is provided downstream of the first providing device 411, the second providing device 412, and the separator providing mechanism 42, which means that in the winding and forming process, the first electrode plate 231 provided by the first providing device 411 is transported to the winding mechanism 44, the second electrode plate 232 provided by the second providing device 412 is transported to the winding mechanism 44, and the separator 233 provided by the separator providing mechanism 42 is transported to the winding mechanism 44, so as to cause the winding mechanism 44 to wind the first segment 2311, the second segment 2312, the separator 233, and the second electrode plate 232 along the winding direction to form an electrode assembly 23.

The first electrode plate 231 (first segment 2311 and second segment 2312), separator 233, and second electrode plate 232 are stacked and wound to form an electrode assembly 23. The separator 233 is arranged between the first electrode plate 231 and the second electrode plate 232, and the separator 233 is used to separate the first electrode plate 231 and the second electrode plate 232 to avoid contact short circuit between the first electrode plate 231 and the second electrode plate 232.

The winding mechanism 44 can include a turntable and a winding needle, wherein the turntable is configured to drive the winding needle to rotate, so as to wind the first electrode plate 231, separator 233, and second electrode plate 232 onto the winding needle.

According to the winding equipment 400 of the embodiment of the present disclosure, the winding mechanism 44 winds the first segment 2311, the second segment 2312, the separator 233, and the second electrode plate 232 to form an electrode assembly 23. Different treatments can be performed on the first segment 2311 and the second segment 2312, respectively, so that the first segment 2311 and the second segment 2312 have different physical or chemical properties. The performance of the electrode assembly 23 can be better adjusted through internal and external differential configuration.

According to some embodiments of the present disclosure, the coating density of the first active substance layer 2311a is different from that of the second active substance layer 2312a; and/or, the thickness of the first active substance layer 2311a is different from that of the second active substance layer 2312a; and/or, the active substance material of the first active substance layer 2311a and the active substance material of the second active substance layer 2312a are the same or different.

The physical or chemical properties of the first segment 2311 and the second segment 2312 can be changed by changing the coating density, thickness, and active substance material formula of the first active substance layer 2311a and second active substance layer 2312a, so that the electrode assembly 23 can meet different performance requirements and be suitable for different usage scenarios.

According to some embodiments of the present disclosure, the coating density of the first active substance layer 2311a is lower than that of the second active substance layer 2312a.

Since the coating density of the first active substance layer 2311a is less than that of the second active substance layer 2312a, the fracture toughness of the first segment 2311 is greater than the fracture toughness of the second segment 2312, which makes the bending region 235 of the first segment 2311 not easy to crack or fracture, thereby reducing the probability of crack or fracture of the first electrode plate 231, and making the safety of the battery cell 20 composed of the electrode assembly 23 higher.

According to some embodiments of the present disclosure, the first providing device 411 may include a first sub-provider 411a and a second sub-provider 411b, wherein the first sub-provider 411a is configured to provide the first segment 2311 and the second sub-provider 411b is configured to provide the second segment 2312.

The first sub-provider 411a can be an unwinding roller for providing the first segment 2311 of the first electrode plate 231; and the second sub-provider 411b can be an unwinding roller for providing the second segment 2312 of the first electrode plate 231. It should be pointed out that in this case, the first segment 2311 and the second segment 2312 are independent of each other.

Optionally, in order to improve production efficiency, two first sub-providers 411a can be provided, and two second sub-providers 411b can be provided, so as to ensure the supply needs of the first segment 2311 and the second segment 2312, thereby ensuring the feeding progress of the first electrode plate 231, and saving reloading time.

According to some embodiments of the present disclosure, the separator 233 includes a first separator 233a and a second separator 233b, and the separator providing mechanism 42 is configured to provide the first separator 233a and the second separator 233b; the winding equipment 400 also includes a first composite mechanism 431, which is located downstream of the first providing device 411 and the separator providing mechanism 42, wherein the first composite mechanism 431 is configured to composite the first separator 233a, the first electrode plate 231, and the second separator 233b into a first electrode plate component; the first providing device 411 is configured to provide the first electrode plate 231 by causing the first segment 2311 to first enter the first composite mechanism 431 and causing the second segment 2312 to enter the first composite mechanism 431 after the first segment 2311; and the winding mechanism 44 is located downstream of the first composite mechanism 431 and is configured to wind the first electrode plate component and second electrode plate 232 along the winding direction to form an electrode assembly 23.

The first composite mechanism 431 includes a pair of first composite rollers, and the first separator 233a, first electrode plate 231, and second separator 233b are pressed by the pair of first composite rollers to connect the first electrode plate 231 to the first separator 233a and second separator 233b to form a first electrode plate component.

The first segment 2311 first enters the first composite mechanism 431, and the second segment 2312 enters the first composite mechanism 431 after the first segment 2311. The first segment 2311 is connected to the first separator 233a and the second separator 233b firstly, and the second segment 2312 is connected to the first separator 233a and the second separator 233b after the first segment 2311, so that along the winding direction from inside to outside, the first segment 2311 is located upstream of the second segment 2312.

The first separator 233a, the first electrode plate 231, and the second separator 233b are combined to form the first electrode plate component. In other words, the first electrode plate 231 is connected to the first separator 233a and the second separator 233b. The first separator 233a and the second separator 233b play a positioning role in the first electrode plate 231, and the first separator 233a and the second separator 233b clamp the second segment 2312 to drive the second segment 2312 to be wound, thereby providing winding power for the second segment 2312, and further achieving the sequential winding of the first segment 2311 and the second segment 2312. By conveying the first separator 233a and the second separator 233b, the conveying of the first electrode plate 231 can be achieved, thereby ensuring the stable conveying of the first segment 2311 and the second segment 2312.

According to some embodiments of the present disclosure, the first providing device 411 also includes a first connecting mechanism (not shown in the figure), which is used to connect the tail of the first segment 2311 and the head of the second segment 2312 through the first connecting part.

The first connecting part can be adhesive tape, and the first connecting mechanism can be an adhesive tape attaching mechanism. The gluing mechanism includes an adhesive tape providing component, a mechanical claw, and a moving component. The mechanical claw is used to grip the adhesive tape, and the moving component is used to drive the mechanical claw to move, so that the mechanical claw can attach the adhesive tape to the first segment 2311 and the second segment 2312, so that the adhesive tape connects the tail of the first segment 2311 and the head of the second segment 2312.

The first segment 2311 and the second segment 2312 are connected through the first connecting part. When the first segment 2311 is wound, the first segment 2311 can drive the second segment 2312 through the first connecting part, thereby providing winding power for the second segment 2312, and achieving the sequential winding of the first segment 2311 and the second segment 2312.

In other embodiments, the first connecting part can also be a glue, and the first connecting mechanism can also be a glue coating mechanism. The first connecting mechanism applies glue to the tail of the first segment 2311 and the head of the second segment 2312 to connect the tail of the first segment 2311 and the head of the second segment 2312 through glue.

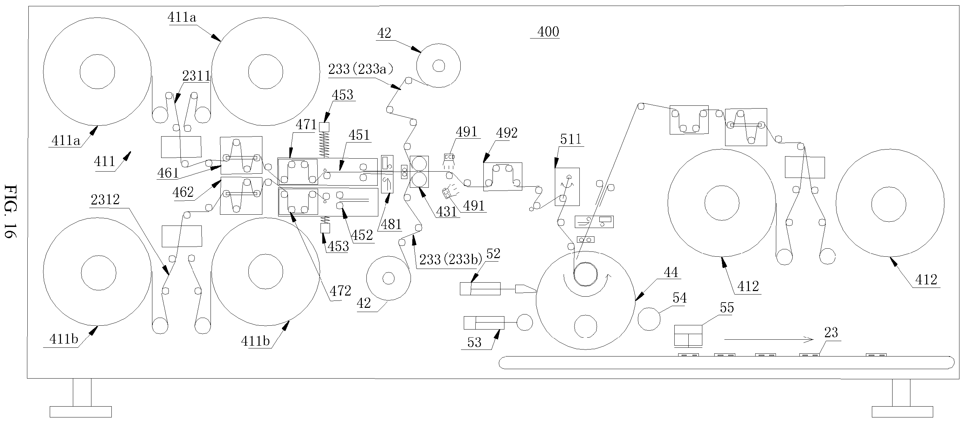

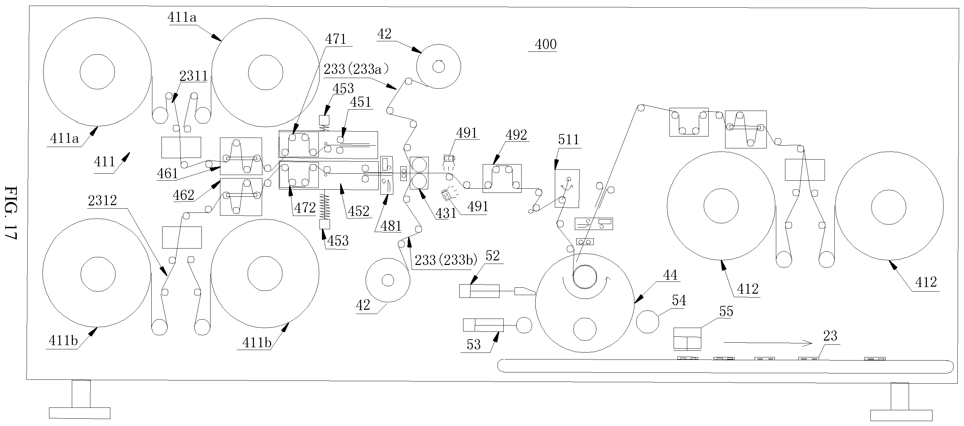

Referring to FIG. 15, and further referring to FIGs. 16 and 17, FIG. 16 is a schematic diagram of the first conveying mechanism 451 provided in some embodiments of the present disclosure in the first conveying position, and FIG. 17 is a schematic diagram of the second conveying mechanism 452 provided in some embodiments of the present disclosure in the first conveying position. According to some embodiments of the present disclosure, as shown in FIGs. 15 to 17, the winding equipment 400 further includes: a first conveying mechanism 451, a second conveying mechanism 452, and a first adjusting mechanism 453. The first conveying mechanism 451 is located between the first sub-provider 411a and the first composite mechanism 431, and the first conveying mechanism 451 is configured to transport the first segment 2311 to the first composite mechanism 431 at the first conveying position; and the second conveying mechanism 452 is located between the second sub-provider 411b and the first composite mechanism 431, and is configured to transport the second segment 2312 to the first composite mechanism 431 at the first conveying position. The first adjusting mechanism 453 is connected to the first conveying mechanism 451 and the second conveying mechanism 452, and the first adjusting mechanism 453 is configured to adjust the first conveying mechanism 451 or the second conveying mechanism 452 to the first conveying position.

The first conveying mechanism 451 and the second conveying mechanism 452 can have the same composition structure. The first conveying mechanism 451 and the second conveying mechanism 452 can both include the conveying roller and the conveying plate, and the first segment 2311 and the second segment 2312 are respectively transported by corresponding conveying roller and conveying plate.

The first conveying position refers to the position of the first electrode plate 231 corresponding to the first composite mechanism 431. At the first conveying position, the first electrode plate 231 can be transported to the first composite mechanism 431 to connect with the separator 233 at the first composite mechanism 431.

The first adjusting mechanism 453 can be a linear driving mechanism, such as a hydraulic cylinder, cylinder, and electric push rod, or can be a driving mechanism, in which the motor and transmission component cooperate to each other. The transmission component can be a gear rack, screw nut, and other transmission components. Alternatively, the first adjusting mechanism 453 can also be other driving mechanisms. For example, the first adjusting mechanism 453 can be a turntable, and both the first conveying mechanism 451 and the second conveying mechanism 452 are connected to the turntable. The turntable drives the first conveying mechanism 451 and the second conveying mechanism 452 to rotate, thereby causing the first conveying mechanism 451 or the second conveying mechanism 452 to be adjusted to the first conveying position.

As shown in FIG. 16, when the first conveying mechanism 451 is in the first conveying position, the first conveying mechanism 451 transports the first segment 2311 to the first composite mechanism 431. At this time, the second conveying mechanism 452 is in the first avoidance position to avoid interference between the second conveying mechanism 452 and the first conveying mechanism 451. As shown in FIG. 17, when the second conveying mechanism 452 is in the first conveying position, the second conveying mechanism 452 transports the second segment 2312 to the first composite mechanism 431. At this time, the first conveying mechanism 451 is in the second avoidance position to avoid interference between the first conveying mechanism 451 and the second conveying mechanism 452. It should be pointed out that the second avoidance position and the first avoidance position are located on both sides of the first conveying position, that is, along the action trajectory of the first adjusting mechanism 453, the first avoidance position, the first conveying position, and the second avoidance position are sequentially set.

By adjusting the positions of the first conveying mechanism 451 and the second conveying mechanism 452 through the first adjusting mechanism 453, the first conveying mechanism 451 transports the first segment 2311 to the first composite mechanism 431, or the second conveying mechanism 452 transports the second segment 2312 to the first composite mechanism 431, thereby ensuring the conveying efficiency of the first electrode plate 231 and ensuring the production efficiency of the electrode assembly 23.

It should be pointed out that the number of first adjusting mechanism 453 can be one, and the first adjusting mechanism 453 is configured to synchronously adjust the positions of the first conveying mechanism 451 and the second conveying mechanism 452. Alternatively, the number of first adjusting mechanism 453 can be two, with one first adjusting mechanism 453 configured to adjust the position of the first conveying mechanism 451 and the other first adjusting mechanism 453 configured to adjust the position of the second conveying mechanism 452.

According to some embodiments of the present disclosure, as shown in FIGs. 15 to 17, the winding equipment 400 further includes a first caching mechanism 461 and a second caching mechanism 462. The first caching mechanism 461 is arranged between the first sub-provider 411a and the first adjusting mechanism 453, and the first caching mechanism 461 is configured to temporarily store the first segment 2311 to ensure continuous feeding of the first segment 2311 when the first adjusting mechanism 453 adjusts the position of the first conveying mechanism 451; and the second caching mechanism 462 is arranged between the second sub-provider 411b and the first adjusting mechanism 453, and the second caching mechanism 462 is configured to temporarily store the second segment 2312 to ensure continuous feeding of the second segment 2312 when the first adjusting mechanism 453 adjusts the position of the second conveying mechanism 452.

Optionally, both the first caching mechanism 461 and the second caching mechanism 462 can be oscillating bar caching mechanisms, which include multiple oscillating bars. By adjusting the distance between two adjacent oscillating bars to change the length of the corresponding first electrode plate passing through the corresponding caching mechanism, the first electrode plate can be temporarily stored.

According to some embodiments of the present disclosure, as shown in FIGs. 15 to 17, the winding equipment 400 further includes a first correcting mechanism 471 and a second correcting mechanism 472. The first correcting mechanism 471 is arranged between the first sub-provider 411a and the first conveying mechanism 451, and the first correcting mechanism 471 is configured for correcting the deviation of the first segment 2311 to ensure the conveying accuracy of the first segment 2311; and the second correcting mechanism 472 is arranged between the second sub-provider 411b and the first conveying mechanism 451, and the second correcting mechanism 472 is configured to correct the deviation of the second segment 2312 to ensure the conveying accuracy of the second segment 2312. The first correcting mechanism 471 and the second correcting mechanism 472 can refer to the correcting device in the prior art, and the present disclosure will not provide a detailed introduction.

According to some embodiments of the present disclosure, as shown in FIGs. 15 to 17, a first cutting mechanism 481 is provided upstream of the first composite mechanism 431, which is configured to cut the first segment 2311 or the second segment 2312, so as to facilitate the first adjusting mechanism 453 adjusting the positions of the first conveying mechanism 451 and the second conveying mechanism 452. The first cutting mechanism 481 can refer to the cutting device in the prior art, and the present disclosure will not provide a detailed introduction.

According to some embodiments of the present disclosure, as shown in FIGs. 15 to 17, the winding equipment 400 further includes a first image detection system 491 and a first pre-roll correcting mechanism 492. The first image detection system 491 and the first pre-roll correcting mechanism 492 are arranged between the first composite mechanism 431 and the winding mechanism 44. The first image detection system 491 is configured to obtain image information of the first electrode plate 231 and the separator 233 combined by the first composite mechanism 431, and the first pre-roll correcting mechanism 492 is configured to correct the first electrode plate 231 and separator 233. The first image detection system 491 can be a CCD (charge coupled device) camera; and the first pre-roll correcting mechanism 492 can refer to the correcting device in the prior art, and the present disclosure will not provide a detailed introduction.

According to some embodiments of the present disclosure, as shown in FIGs. 15 to 17, the winding equipment 400 further includes a first pre-roll tension system 511, which is located upstream of the winding mechanism 44 and configured to adjust the tension of the first electrode plate 231. The first pre-roll tension system 511 includes a first tension roller and a first adjusting element, wherein the first adjusting element is configured to adjust the position of the first tension roller to change the tension of the first electrode plate 231.

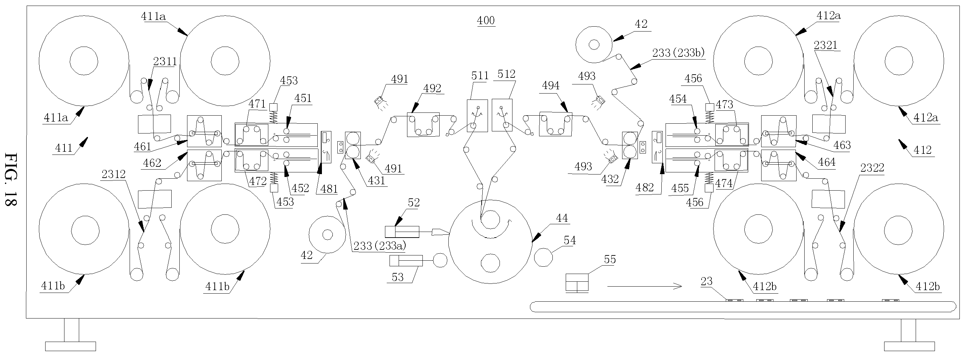

Referring to FIG. 18, FIG. 18 is a structural schematic diagram of the winding equipment 400 provided in some other embodiments of the present disclosure. According to some embodiments of the present disclosure, as shown in FIGs. 10 to 12, the second electrode plate 232 includes a third segment 2321 and a fourth segment 2322, wherein the third active substance layer 2321a is arranged on the third segment 2321; and the fourth active substance layer 2322a is arranged on the fourth segment 2322, wherein the second providing device 412 is configured to provide the second electrode plate 232 by causing the third segment 2321 to enter the winding mechanism 44 first and causing the fourth segment 2322 to enter the winding mechanism 44 after the third segment 2321.

Different treatments can be applied to the third segment 2321 and the fourth segment 2322, respectively, so that the third segment 2321 and the fourth segment 2322 have different physical or chemical properties. The performance of electrode assembly 23 can be better adjusted through internal and external differential configuration.

According to some embodiments of the present disclosure, the coating density of the third active substance layer 2321a is different from that of the fourth active substance layer 2322a; and/or, the thickness of the third active substance layer 2321a is different from that of the fourth active substance layer 2322a; and/or, the active substance material of the third active substance layer 2321a is the same as or different from the active substance material of the fourth active substance layer 2322a.

The physical or chemical properties of the third segment 2321 and the fourth segment 2322 can be changed by changing the coating density, thickness, and active substance material formula of the third active substance layer 2321a and fourth active substance layer 2322a, so that the electrode assembly 23 can meet different performance requirements and be suitable for different usage scenarios.

According to some embodiments of the present disclosure, the coating density of the third active substance layer 2321a is lower than that of the fourth active substance layer 2322a.

The second electrode plate 232 includes the third segment 2321 and the fourth segment 2322. The coating density of the third active substance layer 2321a is less than that of the fourth active substance layer 2322a, thereby making the fracture toughness of the third segment 2321 greater than the fracture toughness of the fourth segment 2322. The bending region 235 of the third segment 2321 is not easy to crack or fracture, thereby reducing the probability of cracks or fractures of the second electrode plate 232, and making battery cell 20 composed of the electrode assembly 23 have a higher safety.

According to some embodiments of the present disclosure, as shown in FIG. 18, the second providing device 412 may include a third sub-provider 412a and a fourth sub-provider 412b, wherein the third sub-provider 412a is configured for providing the third segment 2321, and the fourth sub-provider 412b is configured for providing the fourth segment 2322.

The third sub-provider 412a can be an unwinding roller for providing the third segment 2321 of the second electrode plate 232; and the fourth sub-provider 412b can be an unwinding roller for providing the fourth segment 2322 of the second electrode plate 232. It should be pointed out that in this case, the third segment 2321 and the fourth segment 2322 are independent of each other.

Optionally, in order to improve production efficiency, two third sub-providers 412a can be provided, and two fourth sub-providers 412b can be provided, so as to ensure the supply needs of the third segment 2321 and the fourth segment 2322, thereby ensuring the feeding progress of the second electrode plate 232, and saving reloading time.

According to some embodiments of the present disclosure, separator 233 includes a first separator 233a and a second separator 233b, and the winding equipment 400 includes two separator providing mechanisms 42, with one separator providing mechanism 42 for providing the first separator 233a and the other separator providing mechanism 42 for providing the second separator 233b. The winding equipment 400 also includes a first composite mechanism 431 and a second composite mechanism 432. The first composite mechanism 431 is located downstream of the first providing device 411 and one separator providing mechanism 42, and is configured to composite the first electrode plate 231 and the first separator 233a into a first electrode plate component. The second composite mechanism 432 is located downstream of the second providing device 412 and another separator providing mechanism 42, and is configured to composite the second electrode plate 232 and the second separator 233b into a second electrode plate component. The first providing device 411 is configured to provide the first electrode plate 231 by causing the first segment 2311 to first enter the first composite mechanism 431 and causing the second segment 2312 to enter the first composite mechanism 431 after the first segment 2311. The winding mechanism 44 is located downstream of the first composite mechanism 431 and the second composite mechanism 432, which is configured for winding the first and second electrode plate components along the winding direction to form the electrode assembly 23.

The first electrode plate 231 and the first separator 233a are combined into a first electrode plate component through the first composite mechanism 431 to facilitate the positioning of the first electrode plate 231 through the first separator 233a, and the second electrode plate 232 and the second separator 233b are combined into a second electrode plate component through the second composite mechanism 432 to facilitate the positioning of the second electrode plate 232 through the second separator 233b, thereby ensuring that the first and second electrode plates 231 and 232 in the formed electrode assembly 23 by winding are separated by the first and second separators 233a and 233b, so as to avoid short circuits caused by contact between the first and second electrode plates 231 and 232, and to ensure the safety of the battery cell 20 composed of electrode assembly 23.

The first electrode plate 231 and the first separator 233a are combined into the first electrode plate component. The first segment 2311 is first combined with the first separator 233a, and the second segment 2312 is combined with the first separator 233a after the first segment 2311. The first separator 233a provides winding force for the first segment 2311 and the second segment 2312. Under the driving by the first separator 233a, the first segment 2311 and the second segment 2312 are sequentially wound.

In an embodiment where the second electrode plate 232 includes the third segment 2321 and the fourth segment 2322, the second providing device 412 is configured to provide the second electrode plate 232 by causing the third segment 2321 to enter the second composite mechanism 432 first and causing the fourth segment 2322 to enter the second composite mechanism 432 after the third segment 2321. The third segment 2321 first enters the second composite mechanism 432, and the fourth segment 2322 enters the second composite mechanism 432 after the third segment 2321. The third segment 2321 is first connected to the second separator 233b, and the fourth segment 2322 is connected to the second separator 233b after the third segment 2321, so that along the winding direction from inside to outside, the third segment 2321 is located upstream of the fourth segment 2322.

The second electrode plate 232 and the second separator 233b are combined into the second electrode plate component. The third segment 2321 is first combined with the second separator 233b, and the fourth segment 2322 is combined with the second separator 233b after the third segment 2321. The second separator 233b provides the winding force for the third segment 2321 and the fourth segment 2322. Under the driving by the second separator 233b, the third segment 2321 and the fourth segment 2322 are sequentially wound.

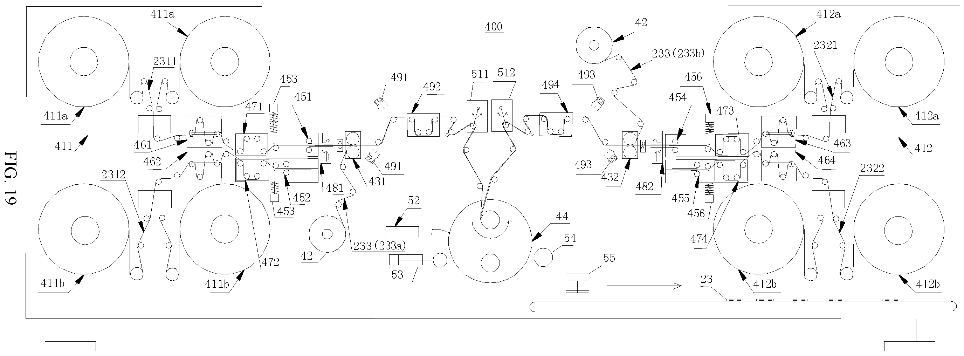

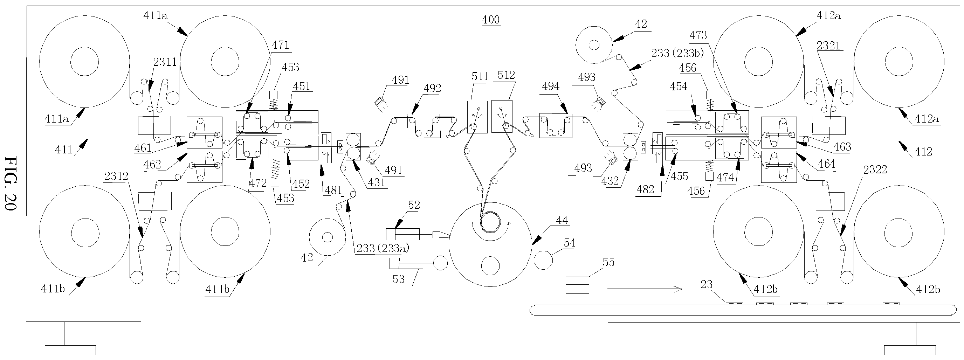

Referring to FIG. 18, and further referring to FIGs. 19 and 20, FIG. 19 is a schematic diagram of the third conveying mechanism 454 provided in some embodiments of the present disclosure in the second conveying position, and FIG. 20 is a schematic diagram of the fourth conveying mechanism 455 provided in some embodiments of the present disclosure in the second conveying position. According to some embodiments of the present disclosure, as shown in FIGs. 18 to 20, the winding equipment 400 further includes: a third conveying mechanism 454, a fourth conveying mechanism 455, and a second adjusting mechanism 456. The third conveying mechanism 454 is located between the third sub-provider 412a and the second composite mechanism 432, and the third conveying mechanism 454 is configured to transport the third segment 2321 to the second composite mechanism 432 at the second conveying position; and the fourth conveying mechanism 455 is located between the fourth sub-provider 412b and the second composite mechanism 432, and is configured to transport the fourth segment 2322 to the second composite mechanism 432 at the second conveying position. The second adjusting mechanism 456 is connected to the third conveying mechanism 454 and the fourth conveying mechanism 455, and the second adjusting mechanism 456 is configured to adjust the third conveying mechanism 454 or the fourth conveying mechanism 455 to the second conveying position.

The third conveying mechanism 454 and the fourth conveying mechanism 455 can have the same composition structure. The third conveying mechanism 454 and the fourth conveying mechanism 455 can both include the conveying roller and the conveying plate, and the third segment 2321 and the fourth segment 2322 are respectively transported by corresponding conveying roller and conveying plate.

The second conveying position refers to the position of the second electrode plate 232 corresponding to the second composite mechanism 432. At the second conveying position, the second electrode plate 232 can be transported to the second composite mechanism 432 to connect with the separator 233 at the second composite mechanism 432.

The second adjusting mechanism 456 can be a linear driving mechanism, such as a hydraulic cylinder, cylinder, and electric push rod, or can be a driving mechanism, in which the motor and transmission component cooperate to each other. The transmission component can be a gear rack, screw nut, and other transmission components. Alternatively, the second adjusting mechanism 456 can also be other driving mechanisms. For example, the second adjusting mechanism 456 can be a turntable, and the third conveying mechanism 454 and the fourth conveying mechanism 455 are both connected to the turntable. The turntable drives the third conveying mechanism 454 and the fourth conveying mechanism 455 to rotate, thereby causing the third conveying mechanism 454 or the fourth conveying mechanism 455 to be adjusted to the second conveying position.

As shown in FIG. 19, when the third conveying mechanism 454 is in the second conveying position, the third conveying mechanism 454 transports the third segment 2321 to the second composite mechanism 432. At this time, the fourth conveying mechanism 455 is in the third avoidance position to avoid interference between the fourth conveying mechanism 455 and the third conveying mechanism 454. As shown in FIG. 20, when the fourth conveying mechanism 455 is in the second conveying position, the fourth conveying mechanism 455 transports the fourth segment 2322 to the second composite mechanism 432. At this time, the third conveying mechanism 454 is in the fourth avoidance position to avoid interference between the third conveying mechanism 454 and the fourth conveying mechanism 455. It should be pointed out that the fourth and third avoidance positions are located on both sides of the second conveying position, that is, along the action trajectory of the second adjusting mechanism 456, the third avoidance position, second conveying position, and fourth avoidance position are sequentially set.

By adjusting the positions of the third conveying mechanism 454 and the fourth conveying mechanism 455 through the second adjusting mechanism 456, the third conveying mechanism 454 transports the third segment 2321 to the second composite mechanism 432, or the fourth conveying mechanism 455 transports the fourth segment 2322 to the second composite mechanism 432, thereby ensuring the conveying efficiency of the first electrode plate 231 and ensuring the production efficiency of the electrode assembly 23.

It should be pointed out that the number of second adjusting mechanism 456 can be one, and the second adjusting mechanism 456 is configured to synchronously adjust the positions of the third conveying mechanism 454 and the fourth conveying mechanism 455. Alternatively, the number of second adjusting mechanism 456 can be two, with one second adjusting mechanism 456 configured to adjust the position of the third conveying mechanism 454 and the other second adjusting mechanism 456 configured to adjust the position of the fourth conveying mechanism 455.

According to some embodiments of the present disclosure, the winding equipment 400 further includes a third caching mechanism 463 and a fourth caching mechanism 464. The third caching mechanism 463 is arranged between the third sub-provider 412a and the second adjusting mechanism 456, and the third caching mechanism 463 is configured to temporarily store the third segment 2321 to ensure continuous feeding of the third segment 2321 when the second adjusting mechanism 456 adjusts the position of the third conveying mechanism 454; and the fourth caching mechanism 464 is arranged between the fourth sub-provider 412b and the second adjusting mechanism 456, and the fourth caching mechanism 464 is configured to temporarily store the fourth segment 2322 to ensure continuous feeding of the fourth segment 2322 when the second adjusting mechanism 456 adjusts the position of the fourth conveying mechanism 455.

Optionally, both the third caching mechanism 463 and the fourth caching mechanism 464 can be oscillating bar caching mechanisms, which include multiple oscillating bars. By adjusting the distance between two adjacent oscillating bars to change the length of part of the corresponding second electrode plate passing through the corresponding caching mechanism, the second electrode plate can be temporarily stored.

According to some embodiments of the present disclosure, as shown in FIGs. 18 to 20, the winding equipment 400 further includes a third correcting mechanism 473 and a fourth correcting mechanism 474. The third correcting mechanism 473 is arranged between the third sub-provider 412a and the third conveying mechanism 454, and the third correcting mechanism 473 is configured for correcting the deviation of the third segment 2321 to ensure the conveying accuracy of the third segment 2321; and the fourth correcting mechanism 474 is arranged between the fourth sub-provider 412b and the third conveying mechanism 454, and the fourth correcting mechanism 474 is configured to correct the deviation of the fourth segment 2322 to ensure the conveying accuracy of the fourth segment 2322. The third correcting mechanism 473 and the fourth correcting mechanism 474 can refer to the correcting device in the prior art, and the present disclosure will not provide a detailed introduction.

According to some embodiments of the present disclosure, as shown in FIGs. 18 to 20, a second cutting mechanism 482 is provided upstream of the second composite mechanism 432, which is configured to cut the third segment 2321 or the fourth segment 2322, so as to facilitate the second adjusting mechanism 456 adjusting the positions of the third conveying mechanism 454 and the fourth conveying mechanism 455. The second cutting mechanism 482 can refer to the cutting device in the prior art, and the present disclosure will not provide a detailed introduction.

According to some embodiments of the present disclosure, as shown in FIGs. 18 to 20, the winding equipment 400 further includes a second image detection system 493 and a second pre-roll correcting mechanism 494. The second image detection system 493 and the second pre-roll correcting mechanism 494 are arranged between the second composite mechanism 432 and the winding mechanism 44. The second image detection system 493 is configured to obtain image information of the second electrode plate 232 and the separator 233 combined by the second composite mechanism 432, and the second pre-roll correcting mechanism 494 is configured to correct the second electrode plate 232 and separator 233. The second image detection system 493 can be a CCD camera; and the second pre-roll correcting mechanism 494 can refer to the correcting device in the prior art, and the present disclosure will not provide a detailed introduction.

According to some embodiments of the present disclosure, as shown in FIGs. 18 to 20, the winding equipment 400 further includes a second pre-roll tension system 512, which is located upstream of the winding mechanism 44, which is configured to adjust the tension of the second electrode plate 232. The second pre-roll tension system 512 includes a second tension roller and a second adjusting element, wherein the second adjusting element is configured to adjust the position of the second tension roller to change the tension of the second electrode plate 232.

According to some embodiments of the present disclosure, as shown in FIGs. 15 to 20, the winding equipment 400 further includes a separator cutter 52, an ending pressing wheel 53, and a gluing pressing wheel 54. The separator cutter 52, the ending pressing wheel 53, and the gluing pressing wheel 54 are all arranged at the winding mechanism 44, and the separator cutter 52 is configured to cut off the separator 233 after the electrode assembly 23 is wound and formed; the ending pressing wheel 53 is configured to press the wound electrode assembly 23 to prevent the wound electrode assembly 23 from loosening; and the gluing pressing wheel 54 is configured to apply the ending glue to the wound electrode assembly 23.

According to some embodiments of the present disclosure, a compacting station 55 is usually provided downstream of the winding mechanism 44 to compact the wound electrode assembly 23, thereby ensuring that the battery cell 20 composed of the electrode assembly 23 has a higher energy density.

The electrode assembly 23 and winding equipment of the embodiment of the present disclosure have been described above, and the winding method of the embodiment of the present disclosure will be described below, in which the parts not described in detail can be referred to the aforementioned embodiments.

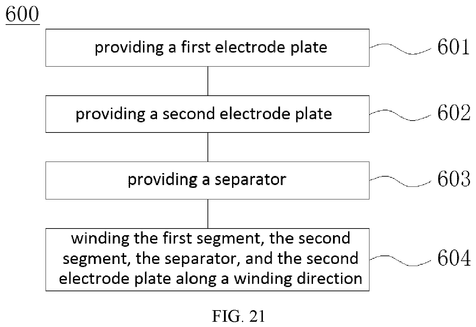

FIG. 21 shows a schematic flowchart of the winding method 600 provided in some embodiments of the present disclosure. As shown in FIG. 21, the winding method 600 can include:
601, providing a first electrode plate 231, which includes a first segment 2311 and a second segment 2312, wherein the first segment 2311 is provided with a first active substance layer 2311a, and the second segment 2312 is provided with a second active substance layer 2312a;
602, providing a second electrode plate 232, the polarity of which is opposite to that of the first electrode plate 231;
603, providing a separator 233; and
604, winding the first segment 2311, the second segment 2312, the separator 233, and the second electrode plate 232 along the winding direction to form the electrode assembly 23, wherein the first segment 2311 is first wound with the separator 233 and the second electrode plate 232, and the second segment 2312 is wound with the separator 233 and the second electrode plate 232 after the first segment 2311.

It should be pointed out that in step "604, winding the first segment 2311, the second segment 2312, the separator 233, and the second electrode plate 232 along the winding direction", along the winding direction from inside to outside, the first segment 2311 is located upstream of the second segment 2312.

According to some embodiments of the present disclosure, the coating density of the first active substance layer 2311a is different from that of the second active substance layer 2312a; and/or, the thickness of the first active substance layer 2311a is different from that of the second active substance layer 2312a; and/or, the active substance material of the first active substance layer 2311a and the active substance material of the second active substance layer 2312a are the same or different.

According to some embodiments of the present disclosure, the coating density of the first active substance layer 2311a is lower than that of the second active substance layer 2312a.

Although the present disclosure has been described with reference to preferred embodiments, various improvements can be made thereto and components therein can be replaced with equivalents without departing from the scope of the present disclosure. Especially, as long as there is no structural conflict, the various technical features mentioned in various embodiments can be combined in any way. The present disclosure is not limited to the specific embodiments disclosed in the text, but includes all technical solutions falling within the scope of the claims.

## Claims

1. An electrode assembly, comprising a first electrode plate and a second electrode plate with opposite polarities, wherein the first electrode plate and the second electrode plate are stacked and wound along a winding direction to form the electrode assembly,
wherein the first electrode plate comprises a first segment and a second segment, wherein the first segment is provided with a first active substance layer, and the second segment is provided with a second active substance layer, and the first segment is located upstream of the second segment along the winding direction from inside to outside.

2. The electrode assembly according to claim 1, wherein a coating density of the first active substance layer is different from a coating density of the second active substance layer.

3. The electrode assembly according to claim 2, wherein the coating density of the first active substance layer is lower than the coating density of the second active substance layer.

4. The electrode assembly according to any one of claims 1-3, wherein a thickness of the first active substance layer is different from a thickness of the second active substance layer.

5. The electrode assembly according to claim 4, wherein a ratio of the thickness of the first active substance layer to the thickness of the second active substance layer is 1/2-3/2.

6. The electrode assembly according to claim 1, wherein an active substance material of the first active substance layer is the same as or different from an active substance material of the second active substance layer.

7. The electrode assembly according to any one of claims 1-6, wherein along the winding direction from inside to outside, a tail of the first segment is connected to a head of the second segment, or a gap is provided between the tail of the first segment and the head of the second segment.

8. The electrode assembly according to claim 7, wherein the first electrode plate further comprises a first current collector, wherein the first active substance layer and the second active substance layer are respectively arranged on the first current collector.

9. The electrode assembly according to claim 7, wherein the first electrode plate further comprises a first current collector segment and a second current collector segment, wherein the first active substance layer is arranged on the first current collector segment to form the first segment, and the second active substance layer is arranged on the second current collector segment to form the second segment.

10. The electrode assembly according to claim 9, wherein the tail of the first segment and the head of the second segment are connected through a first connecting part.

11. The electrode assembly according to claim 1, wherein the electrode assembly further comprises a separator, configured for separating the first electrode plate and the second electrode plate.

12. The electrode assembly according to claim 11, wherein a head of the second segment is connected to the separator.

13. The electrode assembly according to any one of claims 1-6, wherein the second electrode plate comprises a third segment and a fourth segment, wherein the third segment is provided with a third active substance layer, and the fourth segment is provided with a fourth active substance layer; and the third segment is located upstream of the fourth segment in the winding direction from inside to outside.

14. The electrode assembly according to claim 13, wherein
a coating density of the third active substance layer is different from a coating density of the fourth active substance layer; and/or,
a thickness of the third active substance layer is different from a thickness of the fourth active substance layer; and/or,
an active substance material of the third active substance layer is the same as or different from an active substance material of the fourth active substance layer.

15. The electrode assembly according to claim 14, wherein a ratio of the thickness of the third active substance layer to the thickness of the fourth active substance layer is 1/2-3/2.

16. The electrode assembly according to any one of claims 13-15, wherein along the winding direction from inside to outside, a tail of the third segment is connected to a head of the fourth segment, or a gap is provided between the tail of the third segment and the head of the fourth segment.

17. The electrode assembly according to claim 16, wherein the second electrode plate further comprises a second current collector, wherein the third active substance layer and the fourth active substance layer are respectively arranged on the second current collector.

18. The electrode assembly according to claim 16, wherein the second electrode plate further comprises a third current collector segment and a fourth current collector segment, wherein the third active substance layer is arranged on the third current collector segment to form the third segment, and the fourth active substance layer is arranged on the fourth current collector segment to form the fourth segment.

19. The electrode assembly according to claim 18, wherein the tail of the third segment and the head of the fourth segment are connected through a second connecting part.

20. The electrode assembly according to claim 13, wherein the electrode assembly further comprises a separator, configured for separating the first electrode plate and the second electrode plate, wherein a head of the fourth segment is connected to the separator.

21. The electrode assembly according to claim 20, wherein the electrode assembly comprises two separators, wherein the two separators are each located on both sides of the second electrode plate, wherein a head of the second segment is connected to one of the separators, and the head of the fourth segment is connected to another separator.

22. The electrode assembly according to any one of claims 13-21, wherein the number of turns in the third segment is less than the number of turns in the fourth segment.

23. The electrode assembly according to any one of claims 1-22, wherein the number of turns in the first segment is less than the number of turns in the second segment.

24. The electrode assembly according to any one of claims 1-23, wherein a coating density of the second active substance layer is 10%-200% larger than a coating density of the first active substance layer.

25. A battery cell, comprising the electrode assembly according to any one of claims 1-24.

26. A battery, comprising the battery cell according to claim 25.

27. An electrical equipment, comprising the battery according to claim 26.

28. A winding equipment, comprising:
a first providing device, configured to provide a first electrode plate, wherein the first electrode plate comprises a first segment and a second segment, wherein a first active substance layer is provided on the first segment and a second active substance layer is provided on the second segment;
a second providing device, configured to provide a second electrode plate with an opposite polarity to the first electrode plate;
a separator providing mechanism, configured to provide a separator; and
a winding mechanism, provided downstream of the first providing device, the second providing device, and the separator providing mechanism, wherein the winding mechanism is configured to wind the first segment, the second segment, the separator, and the second electrode plate along a winding direction to form an electrode assembly, wherein
the first providing device is configured to provide the first electrode plate by causing the first segment to enter the winding mechanism first and causing the second segment to enter the winding mechanism after the first segment.

29. The winding equipment according to claim 28, wherein a coating density of the first active substance layer is different from a coating density of the second active substance layer; and/or,
a thickness of the first active substance layer is different from a thickness of the second active substance layer; and/or,
an active substance material of the first active substance layer is the same as or different from an active substance material of the second active substance layer.

30. The winding equipment according to claim 28 or 29, wherein the second electrode plate comprises a third segment and a fourth segment, wherein the third segment is provided with a third active substance layer, and the fourth segment is provided with a fourth active substance layer, wherein
the second providing device is configured to provide the second electrode plate by causing the third segment to enter the winding mechanism first and causing the fourth segment to enter the winding mechanism after the third segment.

31. The winding equipment according to claim 30, wherein a coating density of the third active substance layer is different from a coating density of the fourth active substance layer; and/or,
a thickness of the third active substance layer is different from a thickness of the fourth active substance layer; and/or,
an active substance material of the third active substance layer is the same as or different from an active substance material of the fourth active substance layer.

32. The winding equipment according to claim 28, wherein the separator comprises a first separator and a second separator, and the separator providing mechanism is configured to provide the first separator and the second separator, wherein
the winding equipment further comprises a first composite mechanism, wherein the first composite mechanism is located downstream of the first providing device and the separator providing mechanism, wherein the first composite mechanism is configured to composite the first separator, the first electrode plate, and the second separator into a first electrode plate component;
the first providing device is configured to provide the first electrode plate by causing the first segment to first enter the first composite mechanism and causing the second segment to enter the first composite mechanism after the first segment; and
the winding mechanism is provided downstream of the first composite mechanism and is configured to wind the first electrode plate component and the second electrode plate along the winding direction to form the electrode assembly.

33. The winding equipment according to claim 28, wherein the first providing device comprises a first connecting mechanism, wherein the first connecting mechanism is configured to connect a tail of the first segment and a head of the second segment through a first connecting part.

34. The winding equipment according to claim 28, wherein the separator comprises a first separator and a second separator, and the winding equipment comprises two separator providing mechanisms, wherein one of the separator providing mechanisms is configured to provide the first separator and the other separator providing mechanism is configured to provide the second separator; and
the winding equipment further comprises:
a first composite mechanism, located downstream of the first providing device and one of the separator providing mechanisms, wherein the first composite mechanism is configured to composite the first electrode plate and the first separator into a first electrode plate component; and
a second composite mechanism, located downstream of the second providing device and the other separator providing mechanism, wherein the second composite mechanism is configured to composite the second electrode plate and the second separator into a second electrode plate component, wherein
the first providing device is configured to provide the first electrode plate by causing the first segment to first enter the first composite mechanism and causing the second segment to enter the first composite mechanism after the first segment; and
the winding mechanism is provided downstream of the first composite mechanism and the second composite mechanism, and configured to wind the first electrode plate component and the second electrode plate component along the winding direction to form the electrode assembly.

35. A winding method, comprising:
providing a first electrode plate, wherein the first electrode plate comprises a first segment and a second segment, wherein the first segment is provided with a first active substance layer, and the second segment is provided with a second active substance layer;
providing a second electrode plate, wherein a polarity of the second electrode plate is opposite to a polarity of the first electrode plate;
providing a separator; and
winding the first segment, the second segment, the separator, and the second electrode plate along a winding direction to form an electrode assembly, wherein the first segment is first wound with the separator and the second electrode plate, and the second segment is wound with the separator and the second electrode plate after the first segment.

36. The winding method according to claim 35, wherein a coating density of the first active substance layer is different from a coating density of the second active substance layer; and/or,
a thickness of the first active substance layer is different from a thickness of the second active substance layer; and/or,
an active substance material of the first active substance layer is the same as or different from an active substance material of the second active substance layer.
